# EUROPEAN PATENT SPECIFICATION

(11) **EP 4 570 869 B1**
(45) Date of publication and mention of the grant of the patent: **17.06.2026**
(21) Application number: 23216273.5
(22) Date of filing: 13.12.2023
(51) Int. Cl.: C09D 11/101, C07F 9/53, C09D 11/322, C07F 9/32, C07F 9/59, C09D 11/38

(54) **ACYL PHOSPHINE OXIDE PHOTOINITIATORS**
ACYLPHOSPHINOXID-PHOTOINITIATOREN
PHOTOINITIATEURS À BASE D'OXYDE D'ACYL PHOSPHINE

(43) Date of publication of application: 18.06.2025
(73) Proprietor: AGFA NV, 2640 Mortsel (BE)
(72) Inventor: LOCCUFIER, Johan, 2640 Mortsel (BE); HUYSECOM, Luc, 2640 Mortsel (BE)
(74) Representative: Strijckers, Hans Louis P.

(56) References cited:
- EP-A1- 3 241 874
- WO-A1-2019/243039
- WO-A1-2022/106099
- WO-A1-2022/106100

## Description

### Technical Field

The present invention relates to acyl phosphine oxide photoinitiators and their use in photocurable compositions, such as UV curable varnishes and (inkjet) inks.

### Background Art

State of the art UV curable inkjet technology is based on LED curing, which operates for the majority of the printing systems at 395 nm. The number of industrially available photoinitiators suitable for curing at such wavelength is rather limited. Industry uses for UV LED curing at 395 nm in most cases one or more of the following acyl phosphine oxide photoinitiators: phenylbis (2,4,6-trimethylbenzoyl) phosphine oxide (BAPO), diphenyl (2,4,6-trimethylbenzoyl) phosphine oxide (TPO) and ethyl (2,4,6-trimethylbenzoyl) phenylphosphinate (TPO-L). However, there are increasing concerns on the toxicology of BAPO, TPO and TPO-L.

Among these three acyl phosphine oxide photoinitiators, it has been concluded that TPO-L has the lowest cellular toxicity. The latter has been concluded in published studies such as ZENG, Boning, et al. Cytotoxic and cytocompatible comparison among seven photoinitiators-triggered polymers in different tissue cells. Toxicology in vitro - DOl: 10.10161jtiv.2021. 105103. 2021. and KIM, Gi-Tae, et al. Cytotoxicity, Colour Stability and Dimensional Accuracy of 3D Printing Resin with Three Different Photoinitiators. Polymers (Basel) - DOl: 10.3390/polym14050979. 2022.. Industry increasingly replaces BAPO and TPO with TPO-L, however it has been observed that TPO-L has a slower curing rate compared to BAPO and TPO, which can affect the efficiency and quality of the cured products.

One approach to solve the above problems is to search for other types of photoinitiators. A combination of thioxanthones and amine-based co-initiators gives high curing speed with 395 nm UV LEDs, but results in considerable yellowing of the cured layers, making it often fit for CMYK printing applications, but not for varnishes and white inks, and sometimes also not for cyan and magenta inks.

Another approach is to design improved acyl phosphine oxides as they generally do not exhibit photo-yellowing problems. Bis-acyl phosphine oxides have often limited by their solubility in UV curable formulations, leading to mono-acyl phosphine oxides as particularly preferred photoinitiators for 395 nm radiation curable compositions, further narrowing the options. On top of the toxicological concerns and limitations in formulation latitude, as good as all available acyl phosphine oxide initiators are prone to migration and generate volatile degradation products, leading to smell. Especially smell is the limiting factor for a lot of large volume applications such as indoor decoration. The application scope further widens if on top the migration problem can be solved.

Over the last decade, there has been a considerable research activity in search of alternatives for the industrially available acyl phosphine oxides, targeting at solving the above-mentioned problems.

Functionalization on the mesityl fragment of acyl phosphine oxide photoinitiators as disclosed in WO 2014/051026 (FUJIFILM) , WO 2014/129213 (FUJIFILM) , WO 2019/243039 (AGFA) and WO 2022/106099 (AGFA) is a potential solution to solve the problem of volatile degradation products.

WO 2019/243039 (AGFA) discloses urea and oxalyl amide functionalized acyl phosphine oxides, where additional supramolecular interactions are used to further control volatility of the degradation products.

In WO 2022/106099 (AGFA) and WO 2022/106100 (AGFA), additional tertiary amines are integrated into the structure to further optimize the surface cure of the printed images, avoiding migratability of skin irritating acrylates. However, the use of supramolecular interactions often limits the formulation latitude which had to be controlled by additional structural elements not having any further function for radiation curing. This leads to an increase in molecular weight per photoinitiating moiety, impacting both the viscosity of the formulation and the curing speed for a same weight ratio in the formulation. For maintaining the curing speed on an acceptable level, higher amounts of the photoinitiator are be added further impacting the viscosity. The impact on viscosity limits the applicability of the disclosed photoinitiators in ink jet applications, where viscosity of the formulation is particularly critical.

Therefore, there is still a need for photoinitiators having a high photoreactivity and formulation latitude without generating smell and without significantly impacting the viscosity of the formulations, such as UV curable inkjet inks.

### Summary of invention

Now it has been found that the above-mentioned problems can be largely solved by a specific acyl phosphine oxide photoinitiator, more particularly a phosphine oxide photoinitiator having an ether group, a hydroxy group or a tertiary amine group connected via a carbon chain of 1 to 3 carbon atoms to an amide group on the acyl group of a monoacyl phosphine oxide moiety.

A surprising improvement in surface curability was observed for the specific acyl phosphine oxide photoinitiators. Acyl phosphine oxide photoinitiators generally exhibit good curability for the internal part of a polymerizable layer, but not for the surface part of the polymerizable layer leading to an undesired tackiness. The photoinitiators of the invention exhibit a surface curability that is better than TPO-L.

Another advantage of some of the photoinitiators according to the invention is that they allow to prepare low odor photocurable compositions and inks. An acyl phosphine oxide photoinitiator generates upon UV exposure two radical species: a phosphine oxide radical and an acyl radical. While the phosphine oxide radical is almost completely incorporated into the polymerizing network, this is not the case for the acyl radical. Unreacted acyl radicals usually form aldehydes, such as mesitaldehyde, causing a bad smell of the cured product. By linking two monoacyl phosphine oxide moieties to each other via their acyl group, the molecular weight of the acyl radical increases somewhat, thus reducing the volatile degradation products of the acyl phosphine oxide photoinitiators. Another aspect is that also the probability of incorporation into the polymerizing network increases as one photoinitiator generates multiple acyl radicals that are linked to each other. The latter is beneficial for solving the migration problem.

It is thus an object of the present invention to provide a new class of acyl phosphine oxides with increased formulation latitude for low odor photocurable compositions and exhibiting good surface curing.

It is further object of the present invention to provide a radiation curable composition, such as a varnish of a UV curable inkjet ink comprising at least one photoinitiator according to the present invention.

These and other objects and advantages of the present invention will become apparent from the detailed description given below.

### Description of embodiments

### Definitions

The term "alkyl" means all variants possible for each number of carbon atoms in the alkyl group, i.e. for one carbon atom: methyl, for two carbon atoms: ethyl, for three carbon atoms: n-propyl and isopropyl; for four carbon atoms: n-butyl, isobutyl and tertiary-butyl; for five carbon atoms: n-pentyl, 1,1-dimethyl-propyl, 2,2-dimethylpropyl and 2-methyl-butyl, etc.

The term "substituted" in e.g. substituted alkyl group means that the alkyl group may be substituted by other atoms than the atoms normally present in such a group, i.e. carbon and hydrogen. For example, a substituted alkyl group may include a halogen atom or a thiol group, while an unsubstituted alkyl group contains only carbon and hydrogen atoms.

Unless otherwise specified a substituted alkyl group is preferably substituted by a constituent selected from the group consisting of an aryl group, a heteroaryl group, an ester group, an amide group, an ether group, a thioether group, a ketone group, an aldehyde group, a sulfoxide group, a sulfone group, a sulfonate ester group, a sulphonamide group, -Cl, -Br, -I, - OH, -SH, -CN and -NO₂.

Unless otherwise specified a substituted or unsubstituted alkyl group is preferably a C₁ to C₆-alkyl group.

Unless otherwise specified a substituted or unsubstituted alkenyl group is preferably a C₂ to C₆-alkenyl group.

Unless otherwise specified a substituted or unsubstituted alkynyl group is preferably a C₂ to C₆-alkynyl group.

Unless otherwise specified a substituted or unsubstituted alkoxy-group is preferably a C₁ to C₆-alkyl group, wherein a methoxy group, an ethoxy group and a propoxy group are particularly preferred.

The term aryl group means a monocyclic- or polycyclic aromatic ring structure comprising only carbon atoms in the ring structure.

Unless otherwise specified an aryl group is preferably a phenyl or a naphthyl group that may include one, two, three or more C₁ to C₆-alkyl groups, which may be substituted alkyl groups.

Unless otherwise specified a substituted aryl group is an aryl group including one or more groups selected from an aldehyde group, -Cl, -Br, -I, -OH, -SH, -CN and -NO₂.

The term heteroaryl group means a monocyclic- or polycyclic aromatic ring comprising carbon atoms and one or more heteroatoms in the ring structure, preferably 1 to 4 heteroatoms, independently selected from nitrogen, oxygen, selenium and sulphur. Preferably, a heteroaryl group is a monocyclic ring, and more preferably a heteroaryl group is a five- or six-membered ring substituted by one, two or three oxygen atoms, nitrogen atoms, sulphur atoms, selenium atoms or combinations thereof.

Preferred examples of heteroaryl groups include, but are not limited to, pyridinyl, pyridazinyl, pyrimidyl, pyrazyl, quinolyl, triazinyl, pyrrolyl, pyrazolyl, imidazolyl, (1,2,3,)- and (1,2,4)-triazolyl, pyrazinyl, pyrimidinyl, tetrazolyl, furyl, thienyl, isoxazolyl, thiazolyl, isoxazolyl, and oxazolyl.

### Photoinitiators

A photoinitiator in accordance with the invention is an acyl phosphine oxide photoinitiator having an ether group, a hydroxy group or a tertiary amine group connected via a carbon chain of 1, 2 or 3 carbon atoms to an amide group on the acyl group of a monoacyl phosphine oxide moiety.

A photoinitiator in accordance with the invention has a structure according to Formula (1): 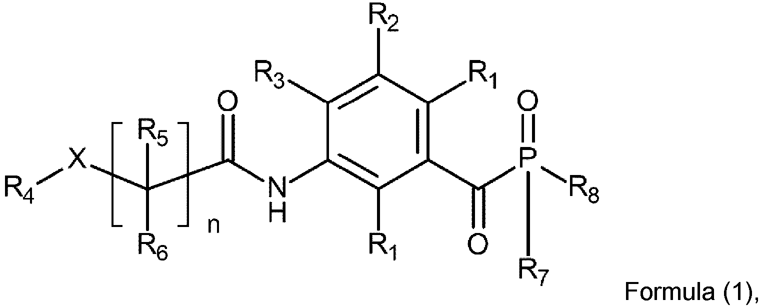 wherein
R₁ is selected from the group consisting of a substituted or unsubstituted alkyl group, a substituted or unsubstituted aryl group and a substituted or unsubstituted alkoxy-group;
R₂ and R₃ are independently selected from the group consisting of a hydrogen, a substituted or unsubstituted alkyl group, a substituted or unsubstituted alkenyl group, a substituted or unsubstituted alkynyl group and a substituted or unsubstituted aryl or heteroaryl group;
R₄ is selected from the group consisting of a hydrogen, a substituted or unsubstituted alkyl group, a substituted or unsubstituted alkenyl group, a substituted or unsubstituted alkynyl group, a substituted or unsubstituted aryl or heteroaryl group, a (meth)acrylate group, a vinyl ether group, an allyl ether group, and a monoacyl phosphine oxide moiety according to Formula (1-1);
R₅ and R₆ are independently selected from the group consisting of a hydrogen, a substituted or unsubstituted alkyl group, a substituted or unsubstituted alkenyl group, a substituted or unsubstituted alkynyl group and a substituted or unsubstituted aryl or heteroaryl group, and one of R₅ and R₆ may represent a monoacyl phosphine oxide moiety according to Formula (1-1), or R₅ and R₆ may represent the necessary atoms to form a five to eight membered ring;
R₇ is selected from the group consisting of a substituted or unsubstituted aryl or heteroaryl group and OR₉;
R₈ represents a substituted or unsubstituted aryl or heteroaryl group;
R₉ is selected from the group consisting of a hydrogen, a substituted or unsubstituted alkyl group, a substituted or unsubstituted alkenyl group, a substituted or unsubstituted alkynyl group and a substituted or unsubstituted aryl or heteroaryl group;
X is selected from the group consisting of O and NR₁₀;
R₁₀ is selected from the group consisting of a substituted or unsubstituted alkyl group, a substituted or unsubstituted alkenyl group, a substituted or unsubstituted alkynyl group and a substituted or unsubstituted aryl or heteroaryl group;
n is an integer selected from 1 to 3; and
wherein the monoacyl phosphine oxide moiety according to Formula (1-1) is: 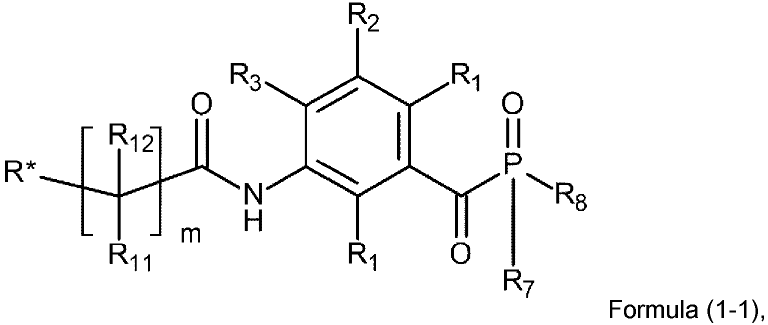
wherein R₁₁ and R₁₂ are independently selected from the group consisting of a hydrogen, a substituted or unsubstituted alkyl group, a substituted or unsubstituted alkenyl group, a substituted or unsubstituted alkynyl group and a substituted or unsubstituted aryl or heteroaryl group;
R* is the coupling position of R₄, R₅ or R₆ to the photoinitiator; and
m is an integer selected from 1 to 3.

In a preferred embodiment, X represents O and/or n, and if present also m, represents 1.

In a preferred embodiment, R₄ is selected from the group consisting of a hydrogen, a substituted or unsubstituted alkyl group, a substituted or unsubstituted alkenyl group and a substituted or unsubstituted alkynyl group, a substituted or unsubstituted alkyl group being particularly preferred.

In a preferred embodiment, R₅ and R₆ are independently selected from the group consisting of a hydrogen and a substituted or unsubstituted alkyl group, a hydrogen and a C1 to C4 alkyl group being more preferred, a hydrogen and a methyl group being the most preferred.

The above preferred embodiments may be combined with each other without any limitation.

In a particularly preferred embodiment, the photoinitiator according to the present invention is represented by Formula (1-2) or (1-3): 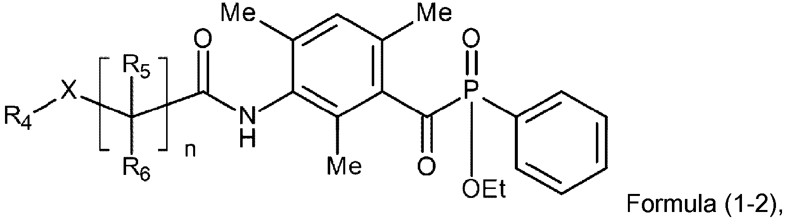 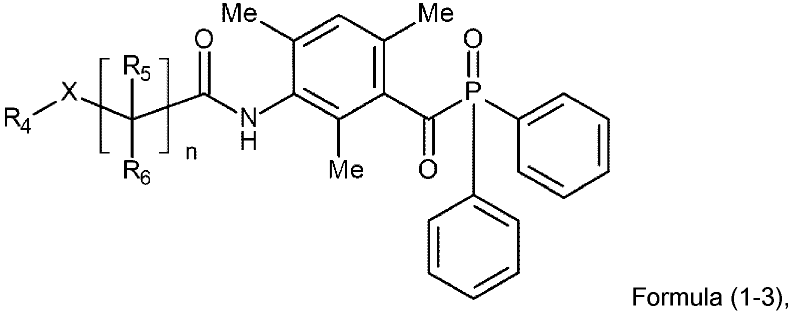 wherein R₄ to R₆, and n are as defined for the compound according to Formula (1).

In the most preferred embodiment, the photoinitiator in accordance with the invention has a structure according to Formula (2): 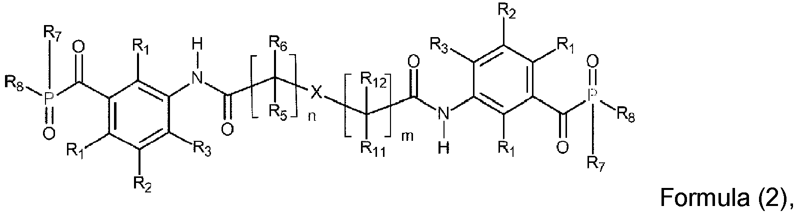 wherein R₁ to R₁₂, X, n and m are as defined for the compound according to Formula (1).

Preferred examples of photoinitiators according to the present invention are given in Table 1 below without being limited thereto.

**Table 1**

| | |
|---|---|
| 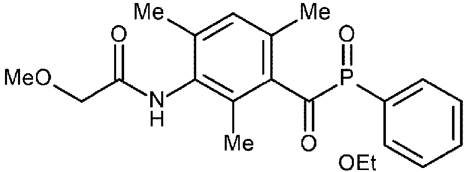 | INI-1 |
| 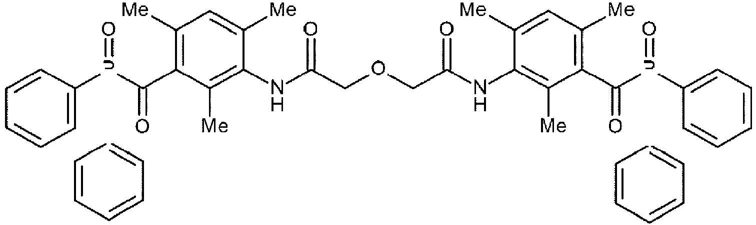 | INI-2 |
| 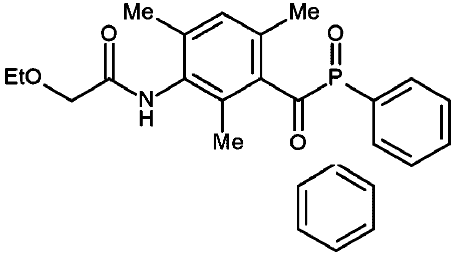 | INI-3 |
| 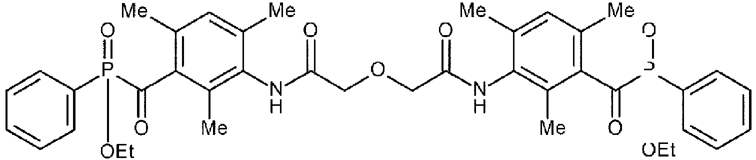 | INI-4 |
| 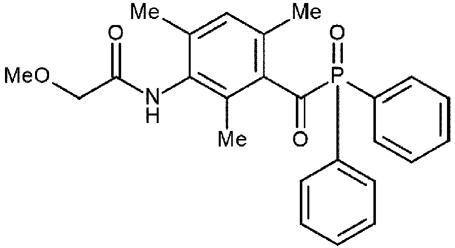 | INI-5 |
| 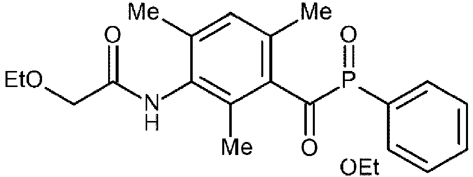 | INI-6 |
| 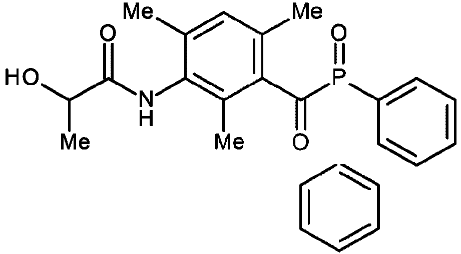 | INI-7 |
| 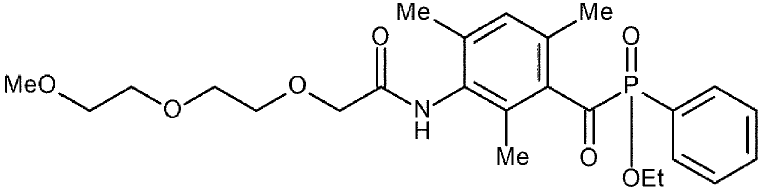 | INI-8 |
| 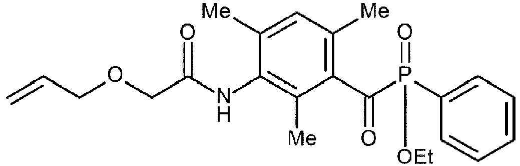 | INI-9 |
| 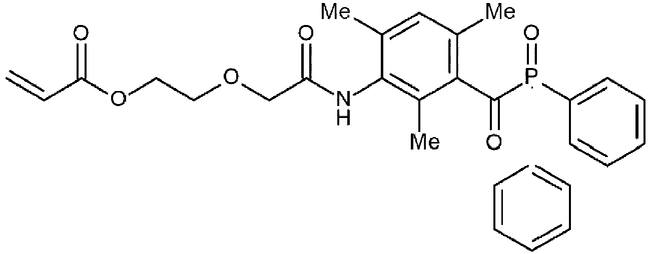 | INI-10 |
| 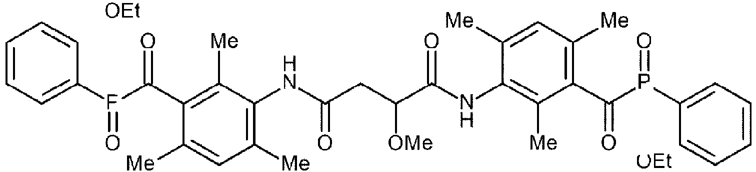 | INI-11 |
| 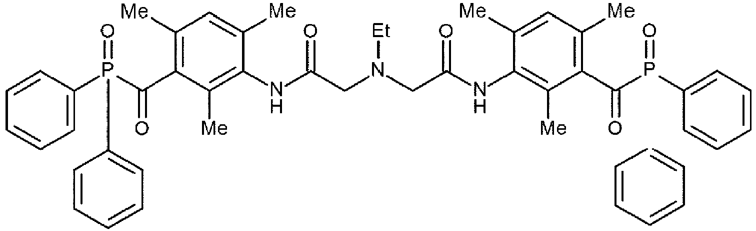 | INI-12 |
| 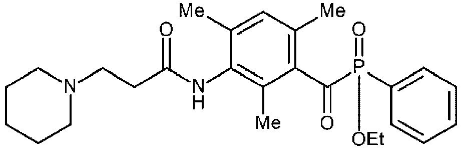 | INI-13 |
| 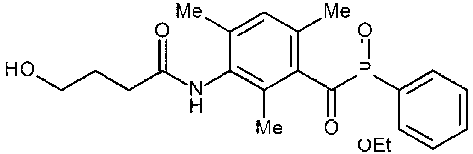 | INI-14 |
| 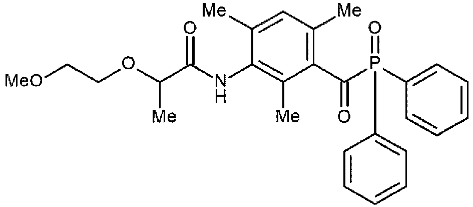 | INI-15 |

### Photocurable Compositions

A photocurable composition in accordance with the invention comprises a photoinitiator as described above and a free radical polymerizable compound as essential components.

Any monomer, oligomer and polymer capable of free radical polymerization may be used as free radical polymerizable compound. The polymerizable compounds may be any monomer and/or oligomer found in the Polymer Handbook Vol 1 + 2, 4th edition, edited by J. BRANDRUP et al., Wiley-Interscience, 1999. A combination of monomers and oligomers may also be used. The monomers and oligomers may possess different degrees of functionality, and a mixture including combinations of mono-, di-, tri-and higher functionality monomers and oligomers may be used.

There is also no limitation on the type of free radical polymerizable chemistry used in the photocurable composition. The free radical polymerizable chemistry may be a (meth)acrylate based polymerizable chemistry, but can also be a thiol-ene and/or thiol-yne polymerizable chemistry. As water and organic solvents may be present, it may also be a polymerizable polymeric particle, such as a polymerizable latex.

A preferred aspect of the invention is a UV curable inkjet ink comprising the above described photocurable composition. The above-described acyl phosphine oxide initiator is preferably present in an amount between 1 and 25 wt%, more preferably 3 and 22 wt%, most preferably between 5 and 20 wt%, with the wt% based on the total weight of the UV curable inkjet ink. In the latter range a suitable viscosity for inkjet printing is generally obtained

The UV curable inkjet ink may be a colourless UV curable inkjet ink, but preferably it contains a colorant. Colourless UV curable inkjet inks may be used, for example, as a primer to improve adhesion to substrate, or as a varnish to improve the glossiness of an image. The photoinitiator in accordance with the invention provides an improved curability compared to TPO-L without photo yellowing issues. The latter is also observed for UV curable inkjet inks containing a cyan pigment and a white pigment.

The UV curable inkjet ink may include other ingredients as desired, such as surfactants, dispersants, dispersion synergists, stabilizers, UV absorbers and the like.

For having a good ejecting ability, the viscosity of the UV curable inkjet ink at the jetting temperature is preferably smaller than 30.0 mPa.s, more preferably smaller than 20.0 mPa.s, most preferably between 5.0 and 16.0 mPa.s at a shear rate of 1000 s⁻¹ and at a jetting temperature between 30 and 70°C, preferably at a temperature of 45°C.

The surface tension of the UV curable inkjet ink is preferably in the range of 20 mN/m to 35 mN/m at 25°C, more preferably in the range of about 22 mN/m to about 30 mN/m at 25°C. In these ranges, good ink spreading is obtained on a wide range of substrates.

A single UV curable inkjet ink can be used, but preferably a UV curable inkjet ink set containing a plurality of colored UV curable inkjet inks in accordance with the invention is used.

For printing multi-colour images, the UV curable inkjet ink is preferably part of a UV curable inkjet ink set containing at least three but most preferably at least four UV curable inkjet inks in accordance with the invention. The inkjet ink set is preferably a UV curable CMYK or CRYK inkjet ink set, preferably further including a UV curable white inkjet ink for enhancing colour vibrancy. This inkjet ink set may also be extended with extra inks such as violet, green, red, blue, and/or orange to further enlarge the colour gamut of the image.

The UV curable inkjet ink set may also be extended by the combination of full density inkjet inks with light density inkjet inks. The combination of dark and light colour inks and/or black and grey inks improves the image quality by a lowered graininess.

The UV curable inkjet ink set may also include one or more colourless UV curable inkjet inks for use as primer and/or varnish.

In a particularly preferred embodiment of a UV curable inkjet ink set, the ink set in accordance with the invention includes:
- a cyan UV curable inkjet ink containing a beta-copper phthalocyanine pigment;
- a red UV curable inkjet ink containing a pigment selected from the group consisting of C.I. Pigment Red 57/1, C.I. Pigment Red 122, C.I. Pigment Red 144, C.I. Pigment Red 170, C.I. Pigment Red 175, C.I. Pigment Red 176, C.I. Pigment Red 187, C.I. Pigment Red 188, C.I. Pigment Red 202, C.I. Pigment Red 207, C.I. Pigment Red 242, C.I. Pigment Red 254, C.I. Pigment Red 272 and mixed crystals thereof;
- a yellow UV curable inkjet ink containing a pigment selected from C.I. Pigment Yellow 74 C.I. Pigment Yellow 83, C.I. Pigment Yellow 97, C.I. Pigment Yellow 110, C.I. Pigment Yellow 120, C.I. Pigment Yellow 139, C.I. Pigment Yellow 138, C.I. Pigment Yellow 150, C.I. Pigment Yellow 151, C.I. Pigment Yellow 154, C.I. Pigment Yellow 155, C.I. Pigment Yellow 175, C.I. Pigment Yellow 180, C.I. Pigment Yellow 181, C.I. Pigment Yellow 194, C.I. Pigment Yellow 213, C.I. Pigment Yellow 214 and mixed crystals thereof; and
- a black UV curable inkjet ink containing a carbon black pigment; preferably complemented by a white inkjet ink and/or a colourless inkjet ink. It was found that such an ink set was especially useful for reproducing wood patterns with minimal ink consumption in addition to improved low odor and surface cure properties. Low odor is essential when manufacturing indoor decorative articles for rooms and vehicles, such as furniture, wallpaper, doors, natural leather articles, textile fabrics and decorative panels such as flooring laminate panels.

When more vibrant colours are desired, the red UV curable inkjet ink is replaced by a magenta UV curable inkjet ink containing a pigment selected from the group consisting of C.I. Pigment Violet 19 and mixed crystals thereof.

### Free Radical Polymerizable Compounds

In a preferred embodiment of the UV curable inkjet inks in accordance with the invention, the UV curable inkjet ink includes one or more free radical polymerizable monomers and/or oligomers.

Any monomer or oligomer capable of free radical polymerization may be used as free radical polymerizable compound. The polymerizable compounds may be any monomer and/or oligomer found in the Polymer Handbook Vol 1 + 2, 4th edition, edited by J. BRANDRUP et al., Wiley-Interscience, 1999. A combination of monomers and oligomers may also be used. The monomers and oligomers may possess different degrees of functionality, and a mixture including combinations of mono-, di-, tri-and higher functionality monomers and oligomers may be used.

A monofunctional polymerizable compound is generally used for enhancing the flexibility of a cured layer, whereas a polyfunctional polymerizable compound is used for enhancing scratch resistance of the cured layer.

A monofunctional polymerizable compound contains a single free radical polymerizable group selected from the group consisting of an acrylate, a methacrylate, an acrylamide, a methacrylamide, a styrene group, a maleate, a fumarate, an itaconate, a vinyl ether, a vinyl ester, an allyl ether and an allyl ester.

A polyfunctional polymerizable compound contains two, three or more free radical polymerizable groups selected from the group consisting of an acrylate, a methacrylate, an acrylamide, a methacrylamide, a styrene group, a maleate, a fumarate, an itaconate, a vinyl ether, a vinyl ester, an allyl ether and an allyl ester.

In a preferred embodiment, the monofunctional polymerizable compounds are selected from acrylic acid, methacrylic acid, maleic acid (or there salts), maleic anhydride, alkyl(meth)acrylates (linear, branched and cycloalkyl) such as methyl(meth)acrylate, n-butyl(meth)acrylate, tert-butyl(meth)acrylate, cyclohexyl(meth)acrylate, and 2-ethylhexyl(meth)acrylate; aryl(meth)acrylates such as benzyl(meth)acrylate, and phenyl(meth)acrylate; hydroxyalkyl(meth)acrylates such as hydroxyethyl(meth)acrylate, and hydroxypropyl(meth)acrylate; (meth)acrylates with other types of functionalities (e.g. oxiranes, amino, fluoro, polyethylene oxide, phosphate substituted) such as glycidyl (meth)acrylate, dimethylaminoethyl(meth)acrylate, trifluoroethyl acrylate, methoxypolyethyleneglycol (meth)acrylate, and tripropyleneglycol (meth)acrylate phosphate; allyl derivatives such as allyl glycidyl ether; styrenics such as styrene, 4-methylstyrene, 4-hydroxystyrene, 4-acetostyrene, and styrenesulfonic acid; (meth)acrylonitrile; (meth)acrylamides (including N-mono and N,N-disubstituted) such as N-benzyl (meth)acrylamide; maleimides such as N-phenyl maleimide; vinyl derivatives such as vinylcaprolactam, vinylpyrrolidone, vinylimidazole, vinylnapthalene, and vinyl halides; vinylethers such as vinylmethyl ether; vinylesters of carboxylic acids such as vinylacetate, vinylbutyrate, and vinyl benzoate.

In a more preferred embodiment, the monofunctional polymerizable compounds are selected from monoacrylates and vinyllactams, such as N-vinylcaprolactam. Particularly preferred monofunctional polymerizable compounds are selected from the group consisting of isoamyl acrylate, stearyl acrylate, lauryl acrylate, octyl acrylate, decyl acrylate, isoamyl acrylate, isostearyl acrylate, 2-ethylhexyl-diglycol acrylate, 2-hydroxybutyl acrylate, 2-acryloyloxyethylhexahydrophthalic acid, butoxyethyl acrylate, ethoxydiethylene glycol acrylate, methoxydiethylene glycol acrylate, methoxypolyethylene glycol acrylate, methoxypropylene glycol acrylate, phenoxyethyl acrylate, tetrahydrofurfuryl acrylate, isobornyl acrylate, 2-hydroxyethyl acrylate, 2-hydroxypropyl acrylate, 2-hydroxy-3-phenoxypropyl acrylate, vinyl ether acrylate, 2-acryloyloxyethylsuccinic acid, 2-acryloyxyethylphthalic acid, 2-acryloxyethyl-2-hydroxyethyl-phthalic acid, lactone modified flexible acrylate, t-butylcyclohexyl acrylate, caprolactone acrylate, cyclic trimethylolpropane formal acrylate, cyclic trimethylolpropane formal acrylate, ethoxylated nonyl phenol acrylate, isodecyl acrylate, isooctyl acrylate, octyldecyl acrylate, alkoxylated phenol acrylate, tridecyl acrylate and acryloylmorpholine

In a preferred embodiment, the monofunctional polymerizable compound includes a N-vinyllactam, such as N-vinylcaprolactam. Another particularly preferred monomer is vinyl methyl oxazolidinone, available as VMOX from BASF. Another particularly preferred monomer is vinyl methyl oxazolidinone, available as VMOX from BASF. The monomers N-vinylcaprolactam and vinyl methyl oxazolidinone are preferred because they provide good ink curability and adhesion of a cured film to a recording medium.

Preferred polyfunctional acrylates include triethylene glycol diacrylate, tetraethylene glycol diacrylate, polyethylene glycol diacrylate, dipropylene glycol diacrylate, tripropylene glycol diacrylate, polypropylene glycol diacrylate, 1,4-butanediol diacrylate, 1,6-hexanediol diacrylate, 1,9-nonanediol diacrylate, neopentyl glycol diacrylate, dimethyloltricyclodecane diacrylate, bisphenol A EO (ethylene oxide) adduct diacrylate, bisphenol A PO (propylene oxide) adduct diacrylate, hydroxypivalate neopentyl glycol diacrylate, propoxylated neopentyl glycol diacrylate, alkoxylated dimethyloltricyclodecane diacrylate and polytetramethylene glycol diacrylate, trimethylolpropane triacrylate, EO modified trimethylolpropane triacrylate, tri (propylene glycol) triacrylate, caprolactone modified trimethylolpropane triacrylate, pentaerythritol triacrylate, pentaerythritol tetraacrylate, pentaerythritolethoxy tetraacrylate, dipentaerythritol hexaacrylate, ditrimethylolpropane tetraacrylate, glycerolpropoxy triacrylate, and caprolactam modified dipentaerythritol hexaacrylate

Other suitable difunctional acrylates include alkoxylated cyclohexanone dimethanol diacrylate, alkoxylated hexanediol diacrylate, dioxane glycol diacrylate, dioxane glycol diacrylate, cyclohexanone dimethanol diacrylate, diethylene glycol diacrylate and neopentyl glycol diacrylate.

Other polyfunctional acrylates include propoxylated glycerine triacrylate and propoxylated trimethylolpropane triacrylate, di-trimethylolpropane tetraacrylate, dipentaerythritol pentaacrylate, ethoxylated pentaerythritol tetraacrylate, methoxylated glycol acrylates and acrylate esters

Preferred polyfunctional acrylates include dipropylene glycol diacrylate, tripropylene glycol diacrylate, 1,6-hexanediol diacrylate, cyclohexane dimethanol diacrylate, polyethyleneglycol 200 diacrylate, 3-methyl 1,5-pentanediol diacrylate, pentaerythritol tetraacrylate, trimethylolpropane triacrylate and dipentaerythritol pentaacrylate.

The polyfunctional polymerizable compound may have two different polymerizable groups, such as a vinylether group and an acrylate group. Preferred vinylether acrylates are those disclosed in US 6310115 (AGFA). A particularly preferred compound is 2- (2'-vinyloxyethoxy)ethyl acrylate (VEEA). Other suitable vinylether acrylates are those disclosed in columns 3 and 4 of US 67679890 B (NIPPON SHOKUBAI).

The use of polyfunctional polymerizable compound having two different polymerizable groups, such as a vinylether group and an acrylate group, allows to manufacture a low migration UV curable inkjet ink for inkjet printing food packaging and toys. A preferred UV curable inkjet ink for inkjet printing of food packaging materials comprises the above-described photoinitiator or photoinitiator mixture and a polymerizable composition comprising of: a) 25 - 100 wt% of one or more polymerizable compounds A having at least one acrylate group and at least one second polymerizable group selected from the group consisting of a vinylether group, an allylether group and an allylester group; b) 0 - 55 wt% of one or more polymerizable compounds B selected from the group consisting of monofunctional acrylates and difunctional acrylates; and c) 0 - 55 wt% of one or more polymerizable compounds C selected from the group consisting of trifunctional acrylates, tetrafunctional acrylates, pentafunctional acrylates and hexafunctional acrylates, with the proviso that if the weight percentage of compounds B > 24 wt%, then the weight percentage of compounds C > 1 wt%;
and wherein all weight percentages of A, B and C are based upon the total weight of the polymerizable composition of the UV curable inkjet ink.

Instead of monofunctional or polyfunctional acrylates, also their methacrylate analogues may be used. For certain applications preferably no acrylates are employed. For example, when the substrate is a textile that is worn directly on the human skin as using acrylates may give rise to skin sensitization.

Another preferred alternative free radical curing chemistry is the so-called thiol-ene and thiol-yne chemistry. In such a chemistry, a combination of at least one polyfunctional thiol compound and at least one polyfunctional polymerizable compound is used. The polyfunctional polymerizable compound is preferably a polyfunctional monomer or oligomer having a plurality of polymerizable groups selected from a group consisting of a vinyl group, an acrylamide group, a methacrylamide group, a vinyl carbonate group, a vinyl ether group, a vinyl ester group, a vinyl carbamate group, an allyl ether groups, an allyl ester group and an alkyne group. Particularly preferred are polymerizable compounds including allyl ether groups, vinyl carbonate groups and alkyne groups.

Synthesis of such monomers is disclosed in the relevant literature, for example in HURD, Charles D.. Vinylation and the Formation of Acylals. Journal Am. Chem.Soc. 1956, vol.78, no.1, p.104_106. ; LOBELL, M., et al. Synthesis of hydroxycarboxylic acid vinyl esters. MP Synthesis. 1994, vol.4, p.375-377. ; LEE, T. Y., et al. Synthesis, Initiation, and Polymerization of Photoinitiating Monomer. Macromolecules. 2005, vol.38, no.18, p.7529-7531. ; ATTA, A.M., et al. New vinyl ester resins based on rosin for coating applications. React. Funct. Polym.. 2006, vol.66, p.1596-1608. ; WO 01/00634 A (WRIGHT CHEM CORP) ; and ROHR, Markus, et al. Solvent-free ruthenium-catalysed vinylcarbamate synthesis from phenylacetylene and diethylamine in 'supercritical' carbon dioxide. Green Chemistry. 2001, vol.3, p.123-125.

Preferred polymerizable oligomers and polymers are urethanes, polyesters, polyethers, polycarbonates, poly-carbamates, polyureas and straight-chain oligomers having the following polymerizable groups: acrylate, methacrylate, vinyl, acrylamide, methacrylamide, vinyl carbonate, vinyl ether, vinylester- vinyl carbamate groups, as well as their corresponding alkene and alkyne compounds.

Particularly preferred monomers are selected from the group consisting of di- or oligofunctional allylethers, di- or oligofunctional allyl esters, di- or oligofunctional vinyl ethers, di- or oligofunctional vinyl esters and di- or oligofunctional norbornene derivatives. Typical allyl ethers can be selected from pentaerythritol tetraallyl ether, glycerol triallyl ether, 1,6-hexane diol diallyl ether, cyclohexane dimethanol diallyl ether, trimethylolpropane triallyl ether, dipentaerythritol hexaallyl ether and ethoxylated and propoxylated derivatives thereof. Typical vinylethers can be selected from pentaerythritol tetravinyl ether, glycerol trivinyl ether, 1,6-hexane diol divinyl ether, cyclohexane dimethanol divinyl ether, trimethylolpropane trivinyl ether, dipentaerythritol hexavinyl ether and ethoxylated and propoxylated derivatives thereof. Typical allyl esters can be selected from adipic acid diallyl ester, terephtalic acid diallyl ester, trimellitic acid triallyl ester, pyromellitic acid tetraallyl ester, citric acid triallyl ester and glutaric acid diallyl ester. Typical vinyl esters can be selected from adipic acid divinyl ester, terephtalic acid divinyl ester, trimellitic acid trivinyl ester, pyromellitic acid tetravinyl ester, citric acid trivinyl ester and glutaric acid divinyl ester.

### Other Photoinitiators and Co-initiators

The UV curable inkjet ink may include other photoinitiators, which may be a Norrish type I initiator and/or a Norrish type II initiator. A Norrish Type I initiator is an initiator which cleaves after excitation, yielding the initiating radical immediately. A Norrish type II-initiator is a photoinitiator which is activated by actinic radiation and forms free radicals by hydrogen abstraction from a second compound that becomes the actual initiating free radical. This second compound is called a polymerization synergist or a co-initiator.

Suitable Norrish type I and II photo-initiators are disclosed in CRIVELLO, J.V., et al. VOLUME III: Photoinitiators for Free Radical Cationic . 2nd edition. Edited by BRADLEY, G.. London,UK: John Wiley and Sons Ltd, 1998. p.287-294.

The acyl phosphine oxide photoinitiator in the UV curable inkjet ink may be combined with a photoinitiator selected from the group consisting of a thioxanthone compound, an α-hydroxyalkylphenone compound and a carbazole compound. Such combinations may improve curing speed further.

In order to increase the photosensitivity further, the UV curable inkjet ink may additionally contain one or more co-initiators, also called polymerization synergists, for which usually amine synergists are used.

Suitable examples of amine synergists can be categorized in three groups:
1) tertiary aliphatic amines such as methyldiethanolamine, dimethylethanolamine, triethanolamine, triethylamine and N-methylmorpholine;
(2) aromatic amines such as amylparadimethylaminobenzoate, 2-n-butoxyethyl-4-(dimethylamino) benzoate, 2-(dimethylamino)ethylbenzoate, ethyl-4-(dimethylamino)benzoate, and 2-ethylhexyl-4-(dimethylamino)benzoate; and
(3) (meth)acrylated amines such as dialkylamino alkyl(meth)acrylates (e.g., diethylaminoethylacrylate) or N-morpholinoalkyl-(meth)acrylates (e.g., N-morpholinoethyl-acrylate).

A UV curable inkjet ink in accordance with the invention preferably comprises a total amount of photoinitiator in an amount of 1 to 25 wt%, more preferably 2 to 20 wt%, based on the total weight of the UV curable inkjet ink.

The UV curable inkjet ink may contain other additives, such as surfactants, dispersants, dispersion synergists, stabilizers, UV absorbers, organic solvents, water and the like.

### Colorants

The UV curable inkjet ink may contain a colorant. The colorants may be dyes, pigments or a combination thereof. Organic and/or inorganic pigments may be used. The colorant is preferably a pigment or a polymeric dye, most preferably an organic colour pigment. Organic colour pigments generally allow to obtain a much broader colour gamut. However, for the colours white and black, preferably inorganic pigments such as titanium dioxide respectively carbon black are used.

The pigments may be black, white, cyan, magenta, yellow, red, orange, violet, blue, green, brown, mixtures thereof, and the like. This colour pigment may be chosen from those disclosed by HERBST, Willy, et al. Industrial Organic Pigments, Production, Properties, Applications. 3rd edition. Wiley - VCH , 2004. ISBN 3527305769.

A preferred pigment for a cyan inkjet ink is a beta-copper phthalocyanine pigment, with C.I. Pigment Blue 15:3 or 15:4 being particularly preferred.

For a red inkjet ink, preferably a pigment is selected from the group consisting of C.I. Pigment Red 57/1, C.I. Pigment Red 122, C.I. Pigment Red 170, C.I. Pigment Red 175, C.I. Pigment Red 176, C.I. Pigment Red 187, C.I. Pigment Red 188, C.I. Pigment Red 207, C.I. Pigment Red 242, C.I. Pigment Red 254, C.I. Pigment Red 272 and mixed crystals thereof;

The pigment in a yellow UV curable inkjet ink is preferably selected from C.I. Pigment Yellow 74, C.I. Pigment Yellow 83, C.I. Pigment Yellow 97, C.I. Pigment Yellow 110, C.I. Pigment Yellow 120, C.I. Pigment Yellow 138, C.I. Pigment Yellow 150, C.I. Pigment Yellow 151, C.I. Pigment Yellow 154, C.I. Pigment Yellow 155, C.I. Pigment Yellow 175, C.I. Pigment Yellow 180, C.I. Pigment Yellow 181, C.I. Pigment Yellow 185, C.I. Pigment Yellow 194, C.I. Pigment Yellow 213, C.I. Pigment Yellow 214 and mixed crystals thereof.

The pigment in a magenta UV curable inkjet ink is preferably C.I. Pigment Violet 19 or a mixed crystal thereof.

Particular preferred violet pigments are C.I. Pigment Violet 23, 32, and 37.

Particular preferred orange pigments are C.I. Pigment Orange 5, 13, 16, 34, 40, 43, 59, 66, 67, 69, 71 and 73.

Particular preferred green pigments are C.I. Pigment Green 7 and 36.

Particular preferred brown pigments are C.I. Pigment Brown 6 and 7.

In a black UV curable inkjet ink, the pigment is preferably a carbon black pigment. Suitable black pigments include carbon blacks such as Pigment Black 7 (e.g. Carbon Black MA8^{®} from MITSUBISHI CHEMICAL), Regal^{®} 400R, Mogul^{®} L, Elftex^{®} 320 from CABOT Co., or Carbon Black FW18, Special Black 250, Special Black 350, Special Black 550, Printex^{®} 25, Printex^{®} 35, Printex^{®} 55, Printex^{®} 90, Printex^{®} 150T from DEGUSSA. In a preferred embodiment, the carbon black pigment used is a pigment having less than 0.15% of toluene-extractable fraction using the method as described in section III, paragraph 5 of the Resolution AP(89) 1 dated 13 September 1989 published by the Council of Europe.

It is also possible to include mixtures of pigments in the inkjet ink. For example, in some inkjet ink application a neutral black inkjet ink is preferred and can be obtained, for instance, by mixing a black pigment and a cyan pigment into the ink. Also pigments may be combined to enlarge the colour gamut of an ink set. The inkjet ink set may also include one or more spot colours. Silver and gold are often desired colours for making a product more attractive by giving it an exclusive appearance.

Suitable pigments include mixed crystals of the above particular preferred pigments. Mixed crystals are also referred to as solid solutions. For example, under certain conditions different quinacridones mix with each other to form solid solutions, which are quite different from both physical mixtures of the compounds and from the compounds themselves. In a solid solution, the molecules of the components enter into the same crystal lattice, usually, but not always, that of one of the components. The x-ray diffraction pattern of the resulting crystalline solid is characteristic of that solid and can be clearly differentiated from the pattern of a physical mixture of the same components in the same proportion. In such physical mixtures, the x-ray pattern of each of the components can be distinguished, and the disappearance of many of these lines is one of the criteria of the formation of solid solutions. A commercially available example is Cinquasia^{™} Magenta L 4540 from SUN CHEMICAL

Pigment particles in inkjet ink should be sufficiently small to permit free flow of the ink through the inkjet-printing device, especially at the ejecting nozzles. It is also desirable to use small particles for maximum colour strength and to slow down sedimentation.

The numeric average pigment particle size is preferably between 0.050 and 1 µm, more preferably between 0.070 and 0.300 µm and particularly preferably between 0.080 and 0.200 µm. Most preferably, the numeric average pigment particle size is no larger than 0.150 µm. An average particle size smaller than 0.050 µm is less desirable for decreased lightfastness, but mainly also because very small pigment particles or individual pigment molecules thereof may still be extracted in food packaging applications.

The numeric average pigment particle size of pigment particles is best determined with a Brookhaven Instruments Particle Sizer BI90plus based upon the principle of dynamic light scattering. The ink is then diluted, for example, with ethyl acetate to a pigment concentration of 0.002 wt%. The measurement settings of the BI90plus are: 5 runs at 23°C, angle of 90°, wavelength of 635 nm and graphics = correction function.

In the case of a white inkjet ink, preferably a pigment with a refractive index greater than 1.60, preferably greater than 2.00, more preferably greater than 2.50 and most preferably greater than 2.60 is used. The white pigments may be employed singly or in combination.

Preferably titanium dioxide is used for the pigment with a refractive index greater than 1.60. Titanium oxide occurs in the crystalline forms of anatase type, rutile type and brookite type. The anatase type has a relatively low density and is easily ground into fine particles, while the rutile type has a relatively high refractive index, exhibiting a high covering power. Either one of these is usable in this invention. It is preferred to make the most possible use of characteristics and to make selections according to the use thereof. The use of the anatase type having a low density and a small particle size can achieve superior dispersion stability, ink storage stability and ejectability. At least two different crystalline forms may be used in combination. The combined use of the anatase type and the rutile type which exhibits a high colouring power can reduce the total amount of titanium oxide, leading to improved storage stability and ejection performance of ink.

For surface treatment of the titanium oxide, an aqueous treatment or a gas phase treatment may be applied, and an alumina-silica treating agent is usually employed. Alumina treated- or alumina-silica treated-titanium oxide are employable, preferably in combination with an organic surface treatment.

The numeric average particle diameter of the titanium oxide or other white pigments is preferably from 50 to 500 nm, more preferably from 150 to 400 nm, and most preferably from 200 to 300 nm for an optimal compromise between hiding power and dispersion stability. Sufficient hiding power cannot be obtained when the average diameter is less than 50 nm, and the storage stability and the jet-out suitability of the ink tend to be degraded when the average diameter exceeds 500 nm. The determination of the numeric average particle diameter is best performed by photon correlation spectroscopy at a wavelength of 633 nm with a 4mW HeNe laser on a diluted sample of the pigmented inkjet ink. A suitable particle size analyzer used was a Malvern^{™} nano-S available from Goffin-Meyvis. A sample may be prepared by addition of one drop of ink to a cuvette containing 1.5 mL ethyl acetate and mixing it until a homogenous sample is obtained. The measured particle size is the average value of 3 consecutive measurements consisting of 6 runs of 20 seconds.

Generally, pigments are stabilized in the dispersion medium by dispersing agents, such as polymeric dispersants or surfactants. However, the surface of the pigments can be modified to obtain so-called "self-dispersible" or "self-dispersing" pigments, i.e. pigments that are dispersible in the dispersion medium without dispersants.

The pigment is preferably used in a concentrated pigment dispersion used for preparing inkjet inks in an amount of 10 to 40 wt%, more preferably an amount of 15 to 30 wt% based on the total weight of the pigment dispersion.

In a coloured inkjet ink the pigment is preferably present in an amount of 0.1 to 13.0 wt%. A dark colour inkjet ink preferably contains 1.5 to 13.0 wt%, more preferably 1.8 to 6.0 wt% of colour pigment based on the total weight of the inkjet ink, while a light colour inkjet ink preferably contains 0.1 to 1.3 wt%, more preferably 0.3 to 1.2 wt% of colour pigment based on the total weight of the inkjet ink.

A white inkjet ink preferably contains more than 13.0 wt%, more preferably 15.0 to 25.0 wt% of a white pigment based on the total weight of the inkjet ink.

### Dispersants

The UV curable inkjet ink preferably contains a dispersant for further improving pigment dispersion properties. For obtaining high printing reliability, the dispersant is preferably a polymeric dispersant. Such dispersant improves the reliability of the inkjet printing process due to a generally smaller sedimentation speed, especially when they contain secondary or tertiary amine groups.

Typical polymeric dispersants are copolymers of two monomers but may contain three, four, five or even more monomers. The properties of polymeric dispersants depend on both the nature of the monomers and their distribution in the polymer. Copolymeric dispersants preferably have the following polymer compositions:
- statistically polymerized monomers (e.g. monomers A and B polymerized into ABBAABAB);
- alternating polymerized monomers (e.g. monomers A and B polymerized into ABABABAB);
- gradient (tapered) polymerized monomers (e.g. monomers A and B polymerized into AAABAABBABBB);
- block copolymers (e.g. monomers A and B polymerized into AAAAABBBBBB) wherein the block length of each of the blocks (2, 3, 4, 5 or even more) is important for the dispersion capability of the polymeric dispersant;
- graft copolymers (graft copolymers consist of a polymeric backbone with polymeric side chains attached to the backbone); and
- mixed forms of these polymers, e.g. blocky gradient copolymers.

The polymeric dispersant has preferably a number average molecular weight Mn between 500 and 30000, more preferably between 1500 and 10000.

The polymeric dispersant has preferably a weight average molecular weight Mw smaller than 100,000, more preferably smaller than 50,000 and most preferably smaller than 30,000.

The polymeric dispersant has preferably a polydispersity PD smaller than 2, more preferably smaller than 1.75 and most preferably smaller than 1.5.

Commercial examples of polymeric dispersants are the following:
- DISPERBYK^{™} dispersants available from BYK CHEMIE GMBH;
- SOLSPERSE^{™} dispersants available from LUBRIZOL;
- TEGO^{™} DISPERS^{™} dispersants from EVONIK;
- EDAPLAN^{™} dispersants from MONZING CHEMIE;
- ETHACRYL^{™} dispersants from LYONDELL;
- GANEX^{™} dispersants from ISP;
- DISPEX^{™} and EFKA^{™} dispersants from BASF;
- DISPONER^{™} dispersants from DEUCHEM.

Particularly preferred polymeric dispersants include Solsperse^{™} dispersants from LUBRIZOL, Efka^{™} dispersants from BASF, Disperbyk^{™} dispersants from BYK CHEMIE GMBH, and Ajisper^{™} dispersants from AJINOMOTO FINE-TECHNO Co. Particularly preferred dispersants are Solsperse^{™} 32000, 35000 and 39000 dispersants from LUBRIZOL and Disperbyk^{™} 162 from BYK CHEMIE GMBH.

The dispersants may be used alone or in combination of two or more kinds thereof.

The polymeric dispersant is preferably used in an amount of 10 to 200 wt%, more preferably 20 to 100 wt%, most preferably 50 to 90 wt% based on the weight of the pigment.

### Dispersion Synergists

The UV curable inkjet ink may include a dispersion synergist to further improve the dispersion stability by a polymeric dispersant and thus also the printing reliability as less pigment can sediment in the nozzle of a print head upon stand-by of an inkjet device.

A dispersion synergist usually consists of an anionic part and a cationic part. The anionic part of the dispersion synergist exhibiting a certain molecular similarity with the colour pigment and the cationic part of the dispersion synergist consists of one or more protons and/or cations to compensate the charge of the anionic part of the dispersion synergist.

The dispersion synergist is preferably added in a smaller amount than the polymeric dispersant(s). The ratio of polymeric dispersant/dispersion synergist depends upon the pigment and should be determined experimentally. Typically, the ratio wt% polymeric dispersant/wt% dispersion synergist is selected between 2:1 to 100:1, preferably between 2:1 and 20:1.

Suitable dispersion synergists that are commercially available include Solsperse^{™} 5000 and Solsperse^{™} 22000 from LUBRIZOL.

Suitable dispersion synergists for a diketopyrrolo-pyrrole pigment, a quinacridone pigment or a mixed crystal thereof include those disclosed in EP 1790698 A (AGFA GRAPHICS) , EP 1790696 A (AGFA GRAPHICS) , WO 2007/060255 (AGFA GRAPHICS) and EP 1790695 A (AGFA GRAPHICS) .

In dispersing C.I. Pigment Blue 15:3, the use of a sulfonated Cu-phthalocyanine dispersion synergist, e.g. Solsperse^{™} 5000 from LUBRIZOL is preferred.

### Stabilizers

The UV curable inkjet ink may also contain a polymerization inhibitor. Due to the fact that an ink contains the polymerization inhibitor, a polymerization reaction before curing, such as during storage or transport, can be prevented. It also improves the printing reliability, since the UV LED UV curable inkjet ink in a print head of an inkjet device is usually kept at a higher temperature like 45 to 55°C.

Suitable polymerization inhibitors include phenol type antioxidants, hindered amine light stabilizers, phosphor type antioxidants, benzoquinone, hydroquinone and derivatives, such as hydroquinone monomethyl ether commonly used in (meth)acrylate monomers.

Examples of the phenolic polymerization inhibitor include, but are not limited to the following substances, p-methoxy phenol, cresol, t-butyl catechol, di-t-butyl-p-cresol, hydroquinone monomethylether, α-naphthol, 3,5-di-t-butyl-4-hydroxytoluene, 2,6-di-t-butyl-4-methylphenol, 2,2'-methylene-bis(4-methyl-6-t-butylphenol), 2,2'-methylene-bis(4-ethyl-6-butylphenol), and 4,4'-thio-bis(3-methyl-6-t-butylphenol) and pyrogallol.

Suitable commercial inhibitors are, for example, Sumilizer^{™} GA-80, Sumilizer^{™} GM and Sumilizer^{™} GS produced by Sumitomo Chemical Co. Ltd.; Genorad^{™} 16, Genorad^{™} 18 and Genorad^{™} 20 from Rahn AG; Irgastab^{™} UV10 and Irgastab^{™} UV22, Tinuvin^{™} 460 and CGS20 from Ciba Specialty Chemicals; Floorstab^{™} UV range (UV-1, UV-2, UV-5 and UV-8) from Kromachem Ltd, Additol^{™} S range (S100, S110, S120 and S130) from Cytec Surface Specialties.

A preferred polymerization inhibitor is Irgastab^{™} UV10 from BASF. Other examples of polymerization inhibitor include TEMPO, TEMPOL, and Al cupferron.

The polymerization inhibitors may be used alone or in combination of two or more kinds thereof.

In a preferred embodiment, the polymerization inhibitor is a mixture of different types of polymerization inhibitors. Preferred polymerization inhibitors are mixtures of an oxyl free radical-based polymerization inhibitor, a phenol-based polymerization inhibitor, and an amine-based polymerization inhibitor. Suitable examples are given in EP 2851402 A (FUJIFILM) .

The polymerization inhibitor is preferably present in an amount of 0.1 to 5 wt% based on the total weight of the free radical curable inkjet ink. Below 0.1 wt%, the undesired polymerization is insufficiently inhibited and above 5 wt% the curing speed is heavily reduced.

### Surfactants

The UV curable inkjet ink may contain a surfactant. The surfactant can be anionic, cationic, non-ionic, or zwitter-ionic. The surfactant is preferably present in an amount of 0.1 to 3 wt% based on the total weight of the free radical curable inkjet ink. At higher concentrations than 3 wt%, the adhesion may deteriorate rapidly, while usually insufficient spreading of the ink is observed at concentration lower than 0.1 wt%.

The total quantity of surfactant is preferably less than 3 wt% based on the total weight of the ink and more preferably less than 1.5 wt% based on the total weight of the UV curable inkjet ink to prevent foaming of the ink in its container. Such foaming has a negative impact on the printing reliability.

Preferred surfactants are selected from fluoro surfactants (such as fluorinated hydrocarbons) and silicone surfactants. The silicone surfactants are preferably siloxanes and can be alkoxylated, polyester modified, polyether modified, polyether modified hydroxy functional, amine modified, epoxy modified and other modifications or combinations thereof. Preferred siloxanes are polymeric, for example polydimethylsiloxanes.

Preferred commercial silicone surfactants include BYK^{™} 333 and BYK^{™} UV3510 from BYK Chemie and Tegoglide^{™} 410 from EVONIK.

In a preferred embodiment, the surfactant is a polymerizable compound.

Preferred polymerizable silicone surfactants include a (meth)acrylated silicone surfactant. Most preferably the (meth)acrylated silicone surfactant is an acrylated silicone surfactant, because acrylates are more reactive than methacrylates.

In a preferred embodiment, the (meth)acrylated silicone surfactant is a polyether modified (meth)acrylated polydimethylsiloxane or a polyester modified (meth)acrylated polydimethylsiloxane.

Preferred commercially available (meth)acrylated silicone surfactants include: Ebecryl^{™} 350 , a silicone diacrylate from Cytec; the polyether modified acrylated polydimethylsiloxane BYK^{™} UV3500, BYK^{™} UV3510 and BYK^{™} UV3530, the polyester modified acrylated polydimethylsiloxane BYK^{™} UV3570, all manufactured by BYK Chemie; Tego^{™} Rad 2100, Tego^{™} Rad 2200N, Tego^{™} Rad 2250N, Tego^{™} Rad 2300, Tego^{™} Rad 2500, Tego^{™} Rad 2600, Tego^{™} Rad 2700, and Tego^{™} RC711 all manufactured by EVONIK. Another preferred silicone is Silwet^{™} L7500 from OSI SPECIALITIES BENELUX NV; Silaplane^{™} FM7711, Silaplane^{™} FM7721, Silaplane^{™} FM7731, Silaplane^{™} FM0711, Silaplane^{™} FM0721, Silaplane^{™} FM0725, Silaplane^{™} TM0701, Silaplane^{™} TM0701T all manufactured by CHISSO Corporation; and DMS-R05, DMS-R11, DMS-R18, DMS-R22, DMS-R31, DMS-U21, DBE-U22, SIB1400, RMS-044, RMS-033, RMS-083, UMS-182, UMS-992, UCS-052, RTT-1011 and UTT-1012 all manufactured by GELEST Inc..

Particularly preferred surfactants for the free radical inkjet ink are Silmer^{®} surfactants from SILTECH CORPORATION, such as Silmer^{®} ACR Di-1508.

### Preparation of UV Curable Inkjet Inks

The preparation of UV curable inkjet inks is well-known to the skilled person.

The average particle size and distribution of a colour pigment is an important feature for inkjet inks. The inkjet ink may be prepared by precipitating or milling the pigment in the dispersion medium in the presence of the dispersant.

Mixing apparatuses may include a pressure kneader, an open kneader, a planetary mixer, a dissolver, and a Dalton Universal Mixer. Suitable milling and dispersion apparatuses are a ball mill, a pearl mill, a colloid mill, a high-speed disperser, double rollers, a bead mill, a paint conditioner, and triple rollers. The dispersions may also be prepared using ultrasonic energy or using a microfluidizer.

Different types of materials may be used as milling media, such as glasses, ceramics, metals, and plastics. In a preferred embodiment, the grinding media can comprise particles, preferably substantially spherical in shape, e.g. beads consisting essentially of a polymeric resin or yttrium stabilized zirconium oxide beads.

In the process of mixing, milling and dispersion, each process is performed with cooling to prevent build-up of heat and as much as possible under light conditions in which actinic radiation has been substantially excluded.

The inkjet ink may contain more than one pigment, and may be prepared using separate dispersions for each pigment, or alternatively several pigments may be mixed and co-milled in preparing the dispersion.

The dispersion process can be carried out in a continuous, batch or semi-batch mode.

The preferred amounts and ratios of the ingredients of the mill grind will vary depending upon the specific materials and the intended applications. The contents of the milling mixture comprise the mill grind and the milling media. The mill grind comprises pigment, polymeric dispersant and a liquid carrier. For inkjet inks, the pigment is usually present in the mill grind at 5 to 50 wt%, excluding the milling media. The weight ratio of pigment over polymeric dispersant is preferably 20:1 to 1:2, more preferably 2:1 to 1:1.

The optimal milling time can vary and depends upon the pigment, mechanical means and residence conditions selected, the initial and desired final particle size, etc. In the present invention pigment dispersions with an average particle size of less than 100 nm may be prepared.

After milling is completed, the milling media is separated from the milled particulate product (in either a dry or liquid dispersion form) using conventional separation techniques, such as by filtration, sieving through a mesh screen, and the like. Often the sieve is built into the mill, such as for a bead mill. The milled pigment concentrate is preferably separated from the milling media by filtration.

In general, it is desirable to make the Inkjet inks in the form of a concentrated pigment dispersion, which is subsequently diluted to the appropriate concentration for use in the inkjet printing system. This technique permits preparation of a greater quantity of pigmented ink from the equipment. By dilution, the inkjet ink is adjusted to the desired viscosity, surface tension, colour, hue, saturation density, and print area coverage for a particular application.

### Cured Products

Another aspect of the invention is a cured product formed by UV LED curing the UV curable inkjet ink in accordance with the invention. The cured product exhibits an improvement in the amount of migrateables and a reduction in bad smell compared to UV curable compositions including the traditionally used acyl phosphine oxide TPO-L.

### Inkjet Printing Methods

An inkjet printing method in accordance with the invention preferably comprising the steps of:
a) jetting an image with a UV curable inkjet ink as defined above on a substrate; and
b) curing with UV light emitting diodes having an emission wavelength of 360 nm or larger.

In a preferred embodiment of the inkjet printing method, the image is printed in a single pass in a single pass inkjet device or in two passes in a multi-pass inkjet device. The improved UV LED curing sensitivity of the inkjet ink allows to print a high speeds without a large, expensive curing device.

The UV curing is preferably performed by UV LEDs having an emission wavelength larger than 360 nm, preferably larger than 370 nm and most preferably between 390 and 400 nm.

The UV curable inkjet ink is jetted by one more print heads ejecting small droplets in a controlled manner through nozzles onto a substrate moving relative to the print head(s). A preferred print head for the inkjet printing system is a piezoelectric head. Piezoelectric inkjet printing is based on the movement of a piezoelectric ceramic transducer when a voltage is applied thereto. The application of a voltage changes the shape of the piezoelectric ceramic transducer in the print head creating a void, which is then filled with inkjet ink. When the voltage is again removed, the ceramic expands to its original shape, ejecting a drop of ink from the print head. Piezoelectric print heads have proven to be the most reliable print heads in industrial printing

A preferred piezoelectric print head is a so called push mode type piezoelectric print head, which has a rather large piezo-element capable of ejecting also high viscous inkjet ink droplets. Such a print head is available from RICOH as the GEN5s print head.

A preferred piezoelectric print head is a so-called through-flow piezoelectric drop-on-demand print head. Such a print head is available from TOSHIBA TEC as the CF1 print head. Through-flow print heads are preferred because they enhance the reliability of inkjet printing due to the ink circulation within the print head.

The inkjet print head preferably scans back and forth in a transversal direction across the moving ink-receiver surface. The inkjet print head may not print on the way back, but bi-directional printing is preferred for obtaining a high areal throughput. For maximizing high areal throughput, another printing method may be used that is known as a "single pass printing process", which can be performed by using page wide inkjet print heads or multiple staggered inkjet print heads that cover the entire width of the ink-receiver surface. In a single pass printing process the inkjet print heads usually remain stationary and the ink-receiver surface is transported under the inkjet print heads.

However, the inkjet printing of the UV curable inkjet inks is performed in a multi-pass printing mode. Multi-pass printing is a technique used to reduce banding in ink-jet printing. Dots of ink, when still in liquid form, tend to run together due to surface tension. This is referred to as coalescence. To print a high quality image, it is important to print individual round dots. But to achieve full saturated colours, the dots must overlap to completely cover the substrate. By only printing a portion of the image data so as to avoid simultaneously printing adjacent dots during each printing cycle, coalescence may be largely avoided. Additionally, by avoiding all horizontal adjacencies, the transverse speed of the printing mechanism can be increased up to two times the rated print speed of the print head. In a preferred embodiment, the number of passes used is 2 to 6 passes, more preferably no more than 4 passes.

An advantage of using a multi-pass printing mode is that the UV curable inkjet inks are cured in consecutive passes, rather than in a single pass which would require a curing device with a high UV output. The print head lifetime is also larger for multi pass printing. While in single pass printing one side shooter is sufficient to replace the whole print head, in multi pass printing side shooters and even failings can be tolerated. Also the cost of a multi-pass printer is usually much lower, especially for wide format substrates.

For facilitating curing, the inkjet printer may include one or more oxygen depletion units. The oxygen depletion units place a blanket of nitrogen or other relatively inert gas (e.g. CO₂), with adjustable position and adjustable inert gas concentration, in order to reduce the oxygen concentration in the curing environment. Residual oxygen levels are usually maintained as low as 200 ppm, but are generally in the range of 200 ppm to 1200 ppm.

### EXAMPLES

### Methods

### 1. TLC-MS

The molecular mass was determined using TLC-MS, according to the following procedure. A TLC was run under circumstances given in the synthetic examples. The TLC was analyzed using a CAMAG^{™} TLC-MS interface coupled to an AmaZon^{™} SL mass spectrometer (supplied by BRUKER DALTONICS) via an Agilent^{™} 1100 HPLC pump. First a blank spectrum was taken by eluting a spot on the TLC plate where no compounds are present with a 0.01 molar solution of ammonium acetate in methanol. A second spectrum of the compound to be analyzed was taken by eluting the spot of the compound under consideration with a 0.01 molar solution of ammonium acetate in methanol. The first spectrum was subtracted from the second spectrum, giving the spectrum of the compound to be analyzed.

### 2. Curability

The photocurable compositions were coated on a PET175 substrate using a bar coater and a 20 µm wired bar. The samples were cured on a Aktiprint^{™} mini duo LED curing station at full power and a linear curing speed of 10m/min. The number of passes to get full cure, including surface cure was taken as measure for curing speed, with a maximum of 10 passes. For good curability, preferably no more than 3 passes are required.

The surface cure was checked by wiping the surface of the cured samples five times with a Q-tip according to Table 2.

**Table 2**

| **Score Surface cure** | **Observation** |
|---|---|
| **0** | no visual damage |
| **1** | a change in surface gloss |
| **2** | clear surface damage |
| **3** | the coating damaged |
| **4** | almost full removal of the coating |
| **5** | coating was completely removed upon wiping |

### 3. Smell

The smell was evaluated by two persons directly after UV LED curing in the curability test and comparing it with the sample containing TPO-L (CASRN84434-11-7).

The evaluation was performed by giving a score according to the following criteria in Table 3.

**Table 3**

| **Score Smell** | **Criterion** |
|---|---|
| **A** | No improved smell is discernible compared to the sample containing TPO-L |
| **B** | Some improvement in bad smell is discernible compared to the sample containing TPO-L |
| **C** | A clearly improved smell is discernible compared to the sample containing TPO-L |

### 4. Average Particle Size

The average particle size of the pigment particles was determined by photon correlation spectroscopy at a wavelength of 633 nm with a 4mW HeNe laser on a diluted sample of the pigment dispersion. The particle size analyzer used was a Malvern^{™} nano-S available from Goffin-Meyvis. The sample was prepared by addition of one drop of the dispersion to a cuvet containing 1.5 mL ethyl acetate and mixed until a homogenous sample was obtained. The measured particle size is the average value of 3 consecutive measurements consisting of 6 runs of 20 seconds.

### Materials

**Ethyl *P*-(3-amino-2,4,6-trimethylbenzoyl)-*P*-phenylphosphinate** (CASRN2143083-29-6) was prepared according to the method described in WO 2017/191043 (AGFA GRAPHICS) .

**3-[(Diphenylphosphinyl)carbonyl]-2,4,6-trimethylbenzenamine** (CASRN2771298-79-2) was prepared according to the method described in WO 2022/106100 (AGFA) .

**Glutaroyl dichloride, diglycoloyl dichloride** and **2-ethoxyacetyl chloride** were supplied by TCI Europe.

**Methoxyacetyl chloride** was supplied by ABCR GmbH.

**TPO-L** (CASRN84434-11-7) was supplied by IGM as Omnirad TPO-L.

**Silwet^{™} L7500** is a silicone based wetting agent supplied by Momentive Performance Materials GmbH.

**Genomer^{™} 2253** is an acrylated amine oligomer supplied by Rahn.

**VEEA** is 2-(2-vinyloxyethoxy)ethyl acrylate, a difunctional monomer available from NIPPON SHOKUBAI, Japan.

**DPGDA** is dipropylene glycol diacrylate available as Sartomer^{™} SR508 from ARKEMA.

**PET175** is a 175 pm thick unsubbed polyethylene terephthalate sheet available as Astera^{™} type UR175.334 from AGFA-GEVAERT NV.

**COMPINI-1** is a comparative photoinitiator prepared as follows: 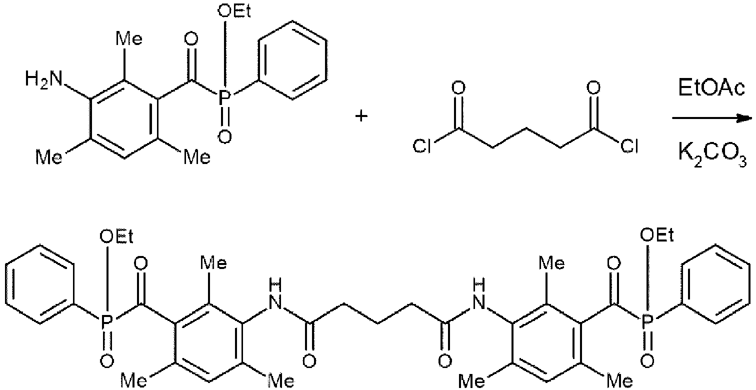 6.63 g (20 mmol) of ethyl P-(3-amino-2,4,6-trimethylbenzoyl)P-phenylphosphinate was dissolved in 40 ml ethyl acetate. A solution of 3.3 g (24 mmol) potassium carbonate in 50 ml water was added to the ethyl acetate solution of ethyl P-(3-amino-2,4,6-trimethylbenzoyl)P-phenylphosphinate upon which ethyl P-(3-amino-2,4,6-trimethylbenzoyl)-P-phenylphosphinate completely dissolved. The reaction mixture was cooled to 5°C and 1.74 g (10.3 mmol) glutaryl dichloride was added dropwise over five minutes while vigorously stirring the mixture. The temperature was maintained below 10°C during the addition. The cooling was removed and the reaction was allowed to continue for two hours at room temperature. The ethyl acetate phase was isolated, extracted with 50 ml of a 0.5 M sodium chloride solution in water and dried over MgSO₄ upon which COMPINI-1 started to crystallize from the medium. The MgSO₄ was removed by adding 400 ml water. The undissolved COMPINI-1 was isolated and treated with 200 ml isopropyl acetate for one hour. Upon treating the residue with isopropyl acetate, COMPINI-1 gradually crystallized from the medium and was isolated by filtration as a white crystalline compound. 4 g (y : 53 %) of COMPINI-1 was isolated (m.p. : 132°C, TLC analysis on a TLC Silica gel 60 RP-18 F₂₅₄S plate supplied by Merck , eluent MeOH/0.5 M NaCl : 70/30, R_{f} : 0.21). The structure of COMPINI-1 was further confirmed using TLC-MS.

**COMPINI-2** is a comparative photoinitiator prepared as follows: 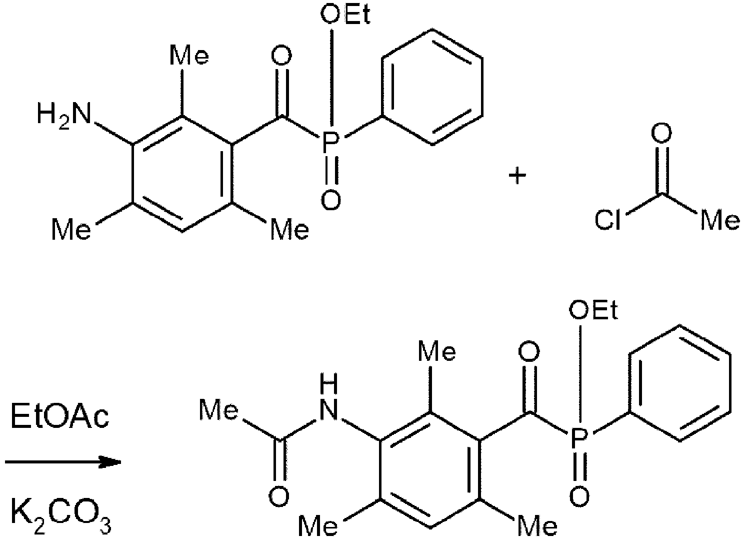 6.6 g (20 mmol) ethyl *P*-(3-amino-2,4,6-trimethylbenzoyl)P-phenylphosphinate was suspended in 40 ml ethyl acetate. A solution of 3.3 g (24 mmol) potassium carbonate in 50 ml water was added. Ethyl *P*-(3-amino-2,4,6-trimethylbenzoyl)-*P*-phenylphosphinate dissolved upon the addition of the potassium carbonate solution. The reaction mixture was cooled to 5°C. 2.5 g (32 mmol) acetyl chloride was added over 5 minutes while intensively stirring the reaction mixture and maintaining the temperature between 5 to 10°C. The cooling was removed reaction mixture was allowed to gradually come to room temperature. The ethyl acetate phase was isolated, extracted with 50 ml of a 0.5 M sodium chloride solution in water, dried over MgSO₄ and evaporated under reduced pressure. 7.1 g (y : 95%) of COMPINI-2 was isolated. COMPINI-2 was analyzed with TLC on a TLC Silica gel 60 RP-18 F₂₅₄S plate supplied by Merck (eluent : MeOH/0.5 M NaCl, R_{f}: 0.4). The structure of COMPINI-2 was further confirmed using TLC-MS.

**COMPINI-3** is a comparative photoinitiator prepared as follows: 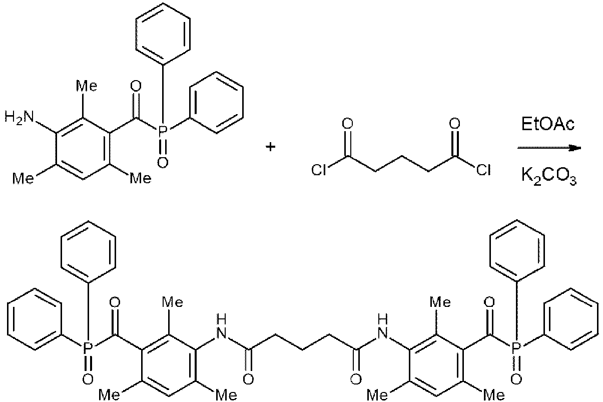 7.27 g (20 mmol) of 3-[(diphenylphosphinyl)carbonyl]2,4,6-trimethylbenzenamine was dissolved in 40 ml ethyl acetate. A solution of 3.3 g (24 mmol) potassium carbonate in 50 ml water was added to the ethyl acetate solution of 3-[(diphenylphosphinyl)carbonyl]2,4,6-trimethylbenzenamine upon which 3-[(diphenylphosphinyl)carbonyl]2,4,6-trimethylbenzenamine completely dissolved in the ethyl acetate. The reaction mixture was cooled to 10°C and 1.74 g (10.3 mmol) glutaroyl dichloride was added dropwise over five minutes while vigorously stirring the mixture. The temperature was maintained below 12°C during the addition. The cooling was removed and the reaction was allowed to continue for one hour at room temperature. COMPINI-3 crystallized from the medium and was isolated by filtration. The crystallized COMPINI-3 was washed with ethyl acetate and dried. 5.9 g (y : 67 %) of COMPINI-3 was isolated (m.p. : 158°C, TLC analysis on a TLC Silica gel 60 F₂₅₄ plate supplied by Merck , eluent : methylene chloride/methanol 95/5, R_{f} : 0.14).

**PB15:4** is an abbreviation used for Sunfast^{™} Blue 15:4, a C.I. Pigment Blue 15:4 pigment from SUN CHEMICAL CORPORATION.

**DB162** is an abbreviation used for the polymeric dispersant Disperbyk^{™} 162 available from BYK CHEMIE GMBH whereof the solvent mixture of 2-methoxy-1-methylethylacetate, xylene and n-butylacetate was removed. The polymeric dispersant is a polyester-polyurethane dispersant on the basis of caprolactone and toluene diisocyanate having an amine value of 13 mg KOH/g, a Mn of about 4,425 and an Mw of about 6,270.

**INHIB** is a mixture forming a polymerization inhibitor having a composition according to Table 4:

**Table 4**

| Component | wt% |
|---|---|
| DPGDA | 82.4 |
| p-methoxyphenol | 4.0 |
| BHT | 10.0 |
| Cupferron^{™} AL | 3.6 |

**BHT** is an abbreviation for 2,6-di-tert.butyl-4-methylphenol (CASRN128-30-0) from ALDRICH CHEMICAL Co.

**Cupferron^{™} AL** is aluminium N-nitrosophenylhydroxylamine from WAKO CHEMICALS LTD.

### Example 1

This example illustrates the synthesis of photoinitiators in accordance with the invention.

### Synthesis of photoinitiator INI-1

6.63 g (20 mmol) of ethyl P-(3-amino-2,4,6-trimethylbenzoyl)P-phenylphosphinate was dissolved in 40 ml ethyl acetate. A solution of 3.3 g (24 mmol) potassium carbonate in 40 ml water was added to the ethyl acetate solution of ethyl *P*-(3-amino-2,4,6-trimethylbenzoyl)P-phenylphosphinate. The mixture was cooled to 2°C and 2.66 g (24 mmol) of methoxyacetyl chloride was added dropwise over 10 minutes while vigorously stirring the mixture. The temperature was maintained below 10° C during the addition. The cooling was removed and the reaction was allowed to continue for 30 minutes at room temperature. The ethyl acetate phase was isolated, extracted with 50 ml of a 0.5 M sodium chloride solution in water, dried over MgSO₄ and evaporated under reduced pressure. 7.6 g (y : 94%) of INI-1 was isolated as a viscous oil (TLC-analysis on a TLC Silica gel 60 F₂₅₄ plate supplied by Merck, eluent : ethyl acetate, R_{f} : 0.23). The structure of INI-1 was further confirmed using TLC-

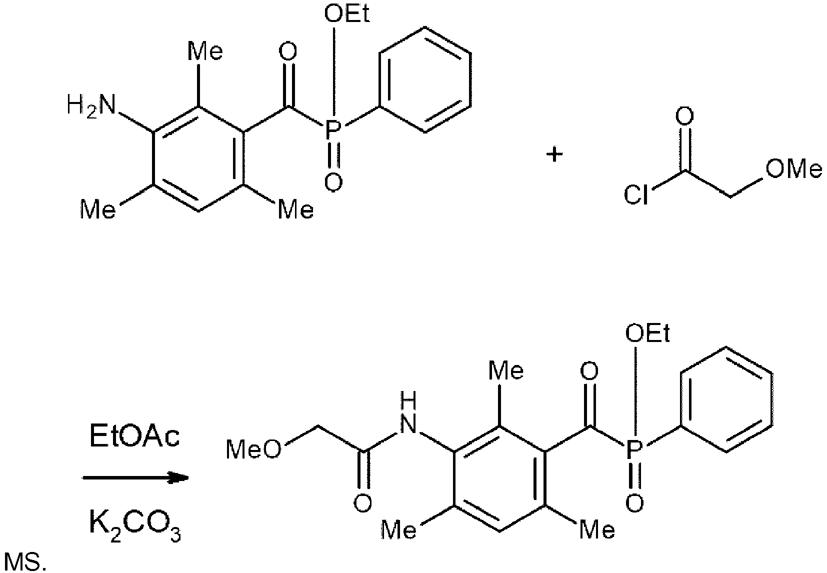

### Synthesis of photoinitiator INI-2

7.27 g (20 mmol) of 3-[(diphenylphosphinyl)carbonyl]2,4,6-trimethylbenzenamine was dissolved in 40 ml ethyl acetate. A solution of 3.3 g (24 mmol) potassium carbonate in 40 ml water was added to the ethyl acetate solution of 3-[(diphenylphosphinyl)carbonyl]2,4,6-trimethylbenzenamine upon which 3-[(diphenylphosphinyl)carbonyl]2,4,6-trimethylbenzenamine completely dissolved in the ethyl acetate. The reaction mixture was cooled to 10°C. 1.76 g (10.3 mmol) diglycoloyl dichloride was added dropwise over two minutes while vigorously stirring the mixture. The temperature was maintained below 12°C during the addition. The cooling was removed and the reaction was allowed to continue for two hours at room temperature. The ethyl acetate phase was isolated, extracted with 50 ml of a 0.5 M sodium chloride solution in water, dried over MgSO₄ and evaporated under reduced pressure. 7.9 g of the crude INI-2 was isolated. INI-2 was purified using preparative column chromatography on Prochrom LC80 column on Kromasil Si 60Å 10 µm silica, using a gradient elution from ethyl acetate to ethyl acetate/methanol 96/4.3.85 g (y : 47%) of INI-2 was isolated (TLC-analysis on a TLC Silica gel 60 F₂₅₄ plate supplied by Merck, eluent : methylene chloride/methanol 95/5, R_{f} : 0.19).

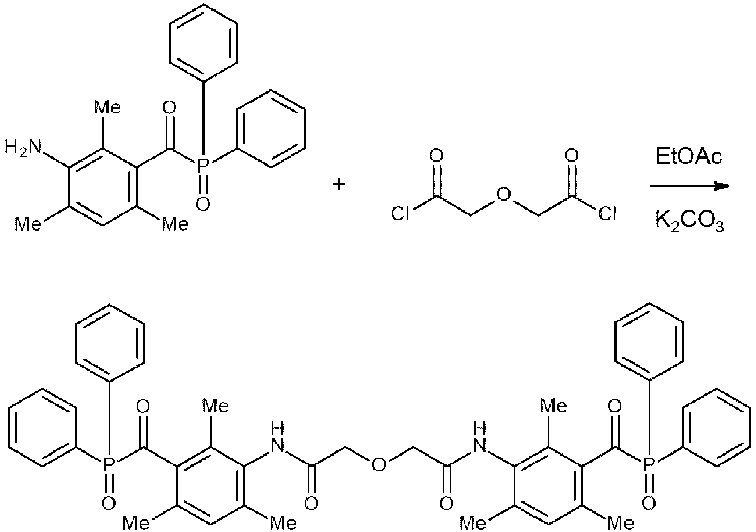

### Synthesis of photoinitiator INI-3

7.27 g (20 mmol) of 3-[(diphenylphosphinyl)carbonyl]2,4,6-trimethylbenzenamine was dissolved in 40 ml ethyl acetate. A solution of 3.3 g (24 mmol) potassium carbonate in 50 ml water was added to the ethyl acetate solution of 3-[(diphenylphosphinyl)carbonyl]2,4,6-trimethylbenzenamine upon which 3-[(diphenylphosphinyl)carbonyl]2,4,6-trimethylbenzenamine completely dissolved in the ethyl acetate. The reaction mixture was cooled to 10°C. 3 g (24 mmol) 2-ethoxyacetyl chloride was added dropwise over two minutes minutes while vigorously stirring the mixture. The temperature was maintained below 12°C during the addition. The cooling was removed and the reaction was allowed to continue for one hour at room temperature. The ethyl acetate phase was isolated, extracted with 50 ml of a 0.5 M sodium chloride solution in water and dried over MgSO₄. INI-3 partially crystallized on the MgSO₄. The MgSO₄ was treated with 100 ml methylene chloride. The ethyl acetate and the methylene chloride fraction were pooled and evaporated under reduced pressure. 8 g (y : 89 %) of INI-3 was isolated (TLC-analysis on a TLC Silica gel 60 F₂₅₄ plate supplied by Merck, eluent : ethyl acetate, R_{f} : 0.23; m.p. : 50°C).

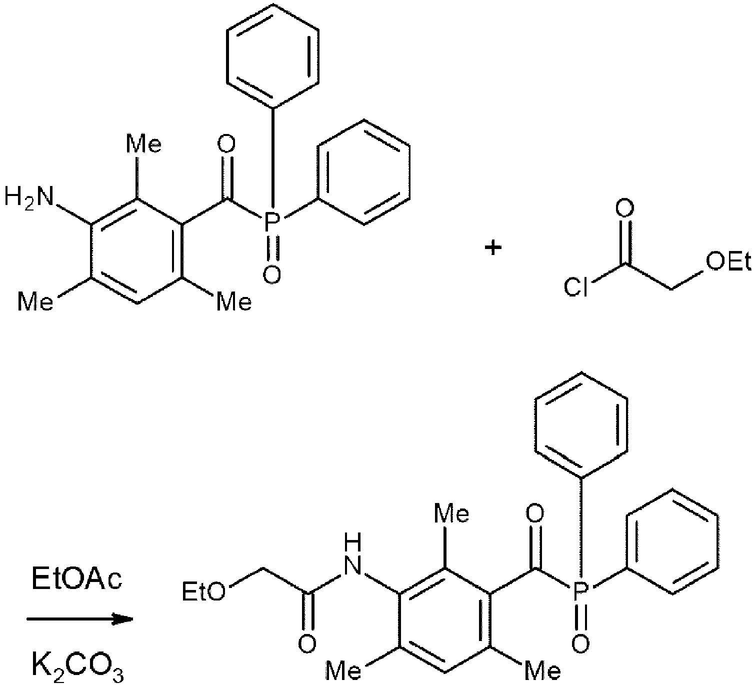

### Synthesis of photoinitiator INI-4

6.63 g (20 mmol) of ethyl P-(3-amino-2,4,6-trimethylbenzoyl)P-phenylphosphinate was dissolved in 40 ml ethyl acetate. A solution of 3.3 g (24 mmol) potassium carbonate in 50 ml water was added to the ethyl acetate phase upon which ethyl P-(3-amino-2,4,6-trimethylbenzoyl)P-phenylphosphinate completely dissolved. The reaction mixture was cooled to 10°C and 1.76 g (10.3 mmol) diglycoloyl dichloride was added dropwise over two minutes while vigorously stirring the mixture. The temperature was maintained below 12°C during the addition. The cooling was removed and the reaction was allowed to continue for one hour at room temperature. The ethyl acetate phase was isolated, extracted with 50 ml of a 0.5 M sodium chloride solution in water, dried over MgSO₄ and evaporated under reduced pressure. 7.4 g (y : 97%) of INI-2 was isolated as an off white solid (m.p. : 90°C, TLC analysis on a TLC Silica gel 60 RP-18 F₂₅₄S plate supplied by Merck, eluent : MeOH/0.5 M NaCl 70/30 : R_{f} :

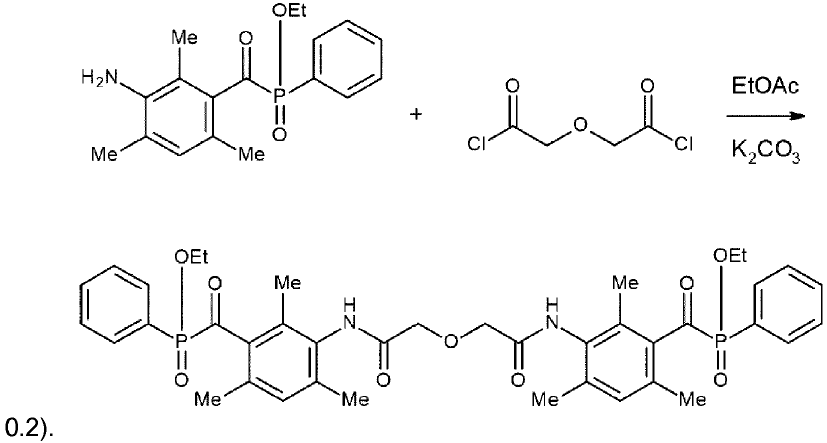

### Synthesis of photoinitiator INI-6

6.63 g (20 mmol) of ethyl *P*-(3-amino-2,4,6-trimethylbenzoyl)P-phenylphosphinate was dissolved in 40 ml ethyl acetate. A solution of 3.3 g (24 mmol) potassium carbonate in 50 ml water was added to the ethyl acetate phase upon which ethyl P-(3-amino-2,4,6-trimethylbenzoyl)P-phenylphosphinate completely dissolved. The reaction mixture was cooled to 10°C and 3 g (24.5 mmol) 2-ethoxyacetyl chloride was added dropwise over two minutes while vigorously stirring the mixture. The temperature was maintained below 12°C during the addition. The cooling was removed and the reaction was allowed to continue for one hour at room temperature. The ethyl acetate phase was isolated, extracted with 50 ml of a 0.5 M sodium chloride solution in water, dried over MgSO₄ and evaporated under reduced pressure. 8.3 g (y :100 %) of INI-6 was isolated as a yellow viscous oil (TLC analysis on a TLC Silica gel 60 F₂₅₄ plate supplied by Merck, eluent : ethyl acetate, R_{f}: 0.35).

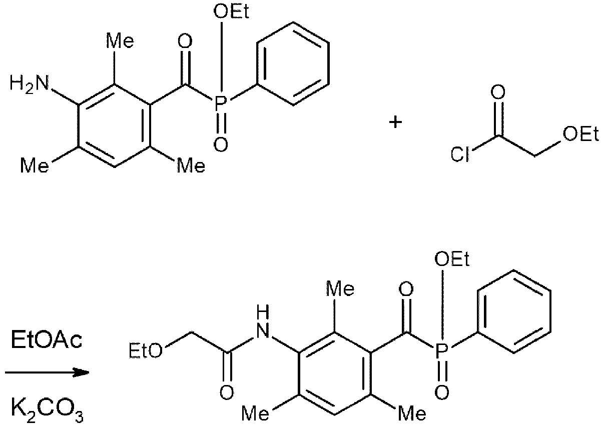

### Example 2

This example illustrates that the photoinitiators according to the present invention provide a good formulation latitude and an improved curing sensitivity compared to the common industrial acyl phosphine oxide TPO-L.

### Preparation of the UV LED curable inkjet inks

The comparative examples COMP-1 to COMP-4 and the inventive examples INV-1 to INV-5 were prepared by mixing the components according to Table 5 and Table 6. The weight% (wt%) were based on the total weight of the LED curable inkjet inks. The wt% of the photoinitiators is chosen such that the molar amount of acyl phosphine oxide moieties is the same in all UV curable inkjet inks.

**Table 5**

| **wt% of** | **COMP-1** | **COMP-2** | **COMP-3** | **COMP-4** |
|---|---|---|---|---|
| TPO-L | 7.8 | - | - | - |
| COMPINI-1 | - | 9.2 | - | - |
| COMPINI-2 | - | - | 9.1 | - |
| COMPINI-3 | - | - | - | 9.9 |
| Genomer^{™} 2253 | 8.9 | 8.9 | 8.9 | 8.9 |
| Silwet^{™} L7500 | 1.0 | 1.0 | 1.0 | 1.0 |
| VEEA | 82.3 | 80.9 | 81 | 80.2 |

**Table 6**

| **wt% of** | **INV-1** | **INV-2** | **INV-3** | **INV-4** | **INV-5** |
|---|---|---|---|---|---|
| INI-1 | 9.7 | - | - | - | - |
| INI-2 | - | 9.9 | - | - | - |
| INI-3 | - | - | 10.7 | - | - |
| INI-4 | - | - | - | 9.2 | - |
| INI-6 | - | - | - | - | 10 |
| Genomer^{™} 2253 | 8.9 | 8.9 | 8.9 | 8.9 | 8.9 |
| Silwet^{™} L7500 | 1.0 | 1.0 | 1.0 | 1.0 | 1.0 |
| VEEA | 80.4 | 80.2 | 79.4 | 80.9 | 80.1 |

### Results and Evaluation

The curability and the smell of the UV curable inkjet inks COMP-1 to COMP-4 and INV-1 to INV-5 were determined. The results are shown in Table 7.

**Table 7**

| **Sample** | **Number of passes** | **Surface cure** | **Smell** |
|---|---|---|---|
| **COMP-1** | 4 | 0 | Reference |
| **COMP-2** | 10 | 5 | C |
| **COMP-3** | 10 | 3 | B |
| **COMP-4** | 10 | 5 | C |
| **INV-1** | 2 | 0 | B |
| **INV-2** | 2 | 0 | C |
| **INV-3** | 3 | 0 | B |
| **INV-4** | 2 | 0 | C |
| **INV-5** | 2 | 0 | B |

From Table 7, it should be immediately clear that only the UV curable inkjet inks INV-1 to INV-5 exhibit an improved curability. The only difference between the UV curable inkjet inks COMP-1 and INV-4 is that an ether group is present in the photoinitiator of the UV curable inkjet ink INV-4. The same is also true when comparing the UV curable inkjet inks COMP-3 and INV-2. The ether function in the photoinitiators of the UV curable inkjet inks INV-1 and INV-5 also provides an improved curability over the structurally similar photoinitiators of UV curable inkjet inks COMP-1 and COMP-3.

The UV curable inkjet inks INV-2 and INV-4 show that a clear improvement in the smell is observed when the photoinitiator is a compound according to Formula (2). It is believed that by linking two monoacyl phosphine oxide moieties to each other via their acyl group, the molecular weight of the acyl radical increases somewhat, thus reducing the volatile degradation products of the acyl phosphine oxide photoinitiators, while also the probability of incorporation into the polymerizing network increases as one photoinitiator generates multiple acyl radicals that are linked to each other. The latter is also beneficial for solving the migration problem.

### Example 3

This example illustrates the inkjet printing of a photocurable inkjet ink including a photoinitiator according to the invention.

### Preparation of the concentrated cyan dispersion DISP-C

A concentrated cyan pigment dispersion was prepared by mixing for 30 minutes the components according to Table 8 using a DISPERLUX^{™} disperser from DISPERLUX S.A.R.L., Luxembourg. The vessel was then connected to a Bachofen DYNOMILL^{™} ECM Poly mill having an internal volume of 8.2 L filled for 42% with 0.4 mm yttrium stabilized zirconia beads. The mixture was circulated over the mill at a flow rate of about 8 L per minute to have a residence time of 38 min. After milling the dispersion was separated from the beads using a 1 µm filter. The average particle size of the pigment particles in the concentrated cyan pigment dispersion DISP-C was found to be 89 nm.

**Table 8**

| component | wt% |
|---|---|
| PB15:4 | 25 |
| DB162 | 10 |
| INHIB | 1 |
| DPGDA | 64 |

### Preparation of the cyan ink jet inks

The comparative ink C-1 and the inventive ink I-1 were jetted on a Synaps^{™} OM135/AP from AGFA using a Dimatix^{™} 10 pl printhead. A jetting frequency of 5KHz was used in combination with a jetting voltage of 31 V. The jetting temperature was adjusted for each inkjet ink until all nozzles jetted and is given below in Table 9.

**Table 9**

| **Ink jet ink** | **Jetting temperature (°C)** |
|---|---|
| **C-1** | 35 |
| **I-1** | 45 |

The printed samples were cured using a Fusion DRSE-120 conveyer, equipped with a UV LED module Unijet^{™} i24511 from USHIO, which transported the samples under the UV-lamp on a conveyer belt at a speed of 20 m/min. The full power of the UV LED was used. The curing degree was evaluated after one pass by wiping 10 times with a Q-tip and evaluating the surface damage. The surface damage was scored according to Table 10:

**Table 10**

| **Score Surface cure** | **Observation** |
|---|---|
| **0** | no visual damage |
| **1** | a change in surface gloss without leaving a trace of ink on the Q-tip |
| **2** | clear surface damage with clear ink contamination on the Q-tip |
| **3** | the full ink layer damaged |
| **4** | almost full removal of the ink layer |
| **5** | ink layer was completely removed upon wiping |

The surface damage evaluation of the comparative ink COMP-1 and the inventive ink INV-1 is summarized in Table 11.

**Table 11**

| **Ink jet Ink** | **Surface damage** |
|---|---|
| **C-1** | 1 |
| **I-1** | 1 |

From this evaluation, it becomes clear that the ink **I-1** comprising an acyl phosphine oxide photoinitiator according to the present invention is readily jettable using standard piezo printheads, without loss in curing sensitivity compared to a standard acyl phosphine oxide photoinitiator. Also, no photo-yellowing problems were observed.

## Claims

1. An acyl phosphine oxide photoinitiator having an ether group, a hydroxy group or a tertiary amine group connected via a carbon chain of 1 to 3 carbon atoms to an amide group on the acyl group of a monoacyl phosphine oxide moiety, wherein the acyl phosphine oxide photoinitiator is a compound being:
a) a compound according to Formula (1): 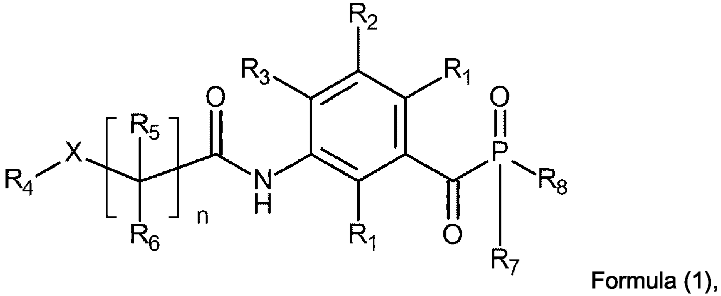 wherein
R₁ is selected from the group consisting of an alkyl group, an aryl group and an alkoxy-group;
R₂ and R₃ are independently selected from the group consisting of a hydrogen, an alkyl group, an alkenyl group, an alkynyl group and an aryl or heteroaryl group;
R₄ is selected from the group consisting of a hydrogen, an alkyl group, an alkenyl group, an alkynyl group, an aryl or heteroaryl group, a (meth)acrylate group, a vinyl ether group, an allyl ether group, and a monoacyl phosphine oxide moiety according to Formula (1-1);
R₅ and R₆ are independently selected from the group consisting of a hydrogen, an alkyl group, an alkenyl group, an alkynyl group and an aryl or heteroaryl group, and one of R₅ and R₆ may represent a monoacyl phosphine oxide moiety according to Formula (1-1), or R₅ and R₆ may represent the necessary atoms to form a five to eight membered ring;
R₇ is selected from the group consisting of an aryl or heteroaryl group and OR₉;
R₈ represents an aryl or heteroaryl group;
R₉ is selected from the group consisting of a hydrogen, an alkyl group, an alkenyl group, an alkynyl group and an aryl or heteroaryl group;
X is selected from the group consisting of O and NR₁₀;
R₁₀ is selected from the group consisting of an alkyl group, an alkenyl group, an alkynyl group and an aryl or heteroaryl group;
n is an integer selected from 1 to 3; and
wherein the monoacyl phosphine oxide moiety according to Formula (1-1) is: 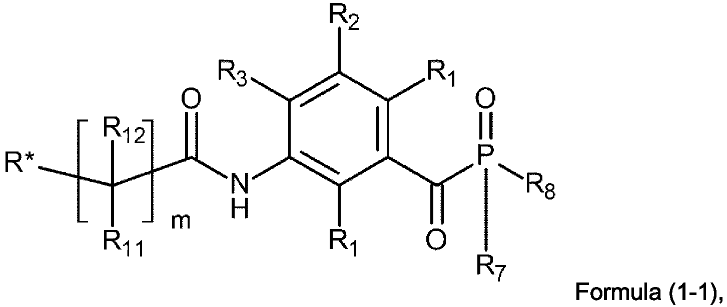
wherein R₁₁ and R₁₂ are independently selected from the group consisting of a hydrogen, an alkyl group, an alkenyl group, an alkynyl group and an aryl or heteroaryl group;
R* is the coupling position of R₄, R₅ or R₆ to the photoinitiator; and
m is an integer selected from 1 to 3;
b) a compound having a structure according to Formula (2): 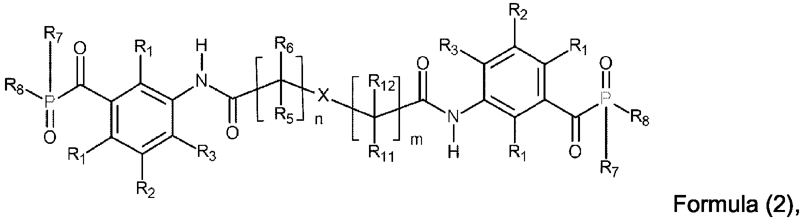 wherein R₁ to R₁₂, X, n and m are as defined for the compound according to Formula (1); and
c) a compound selected from the group consisting of: 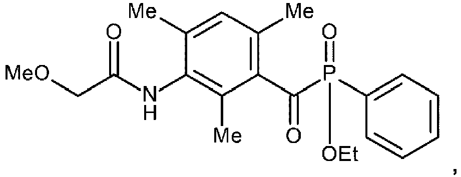 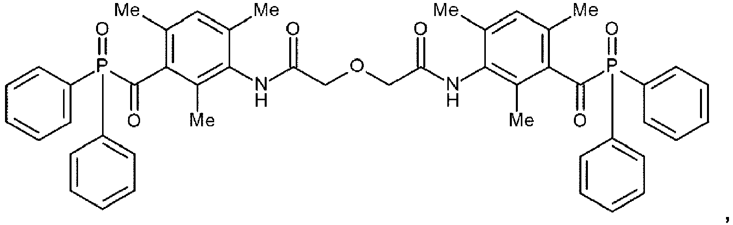 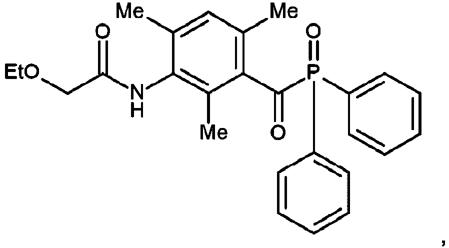 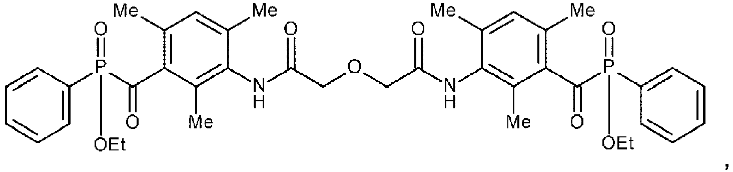 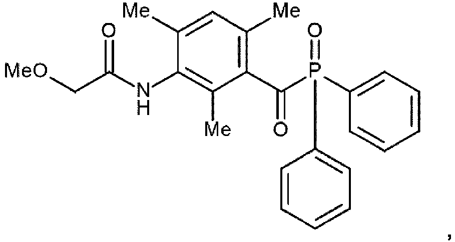 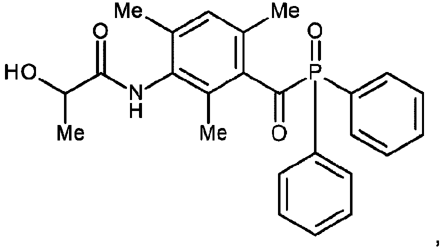 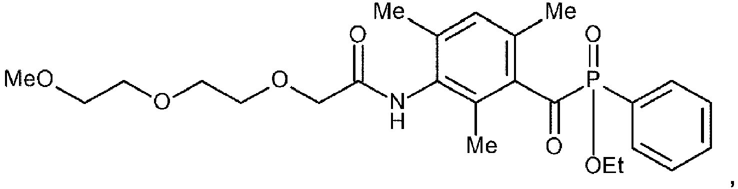 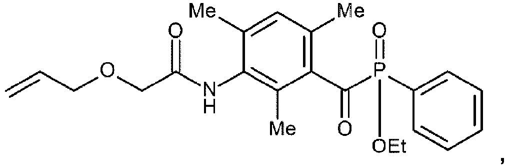 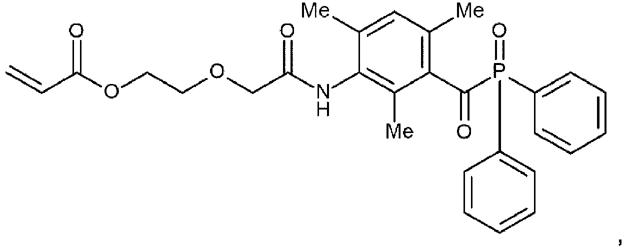 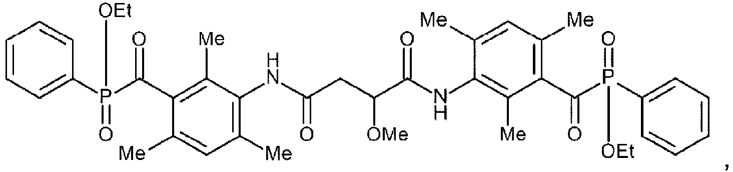 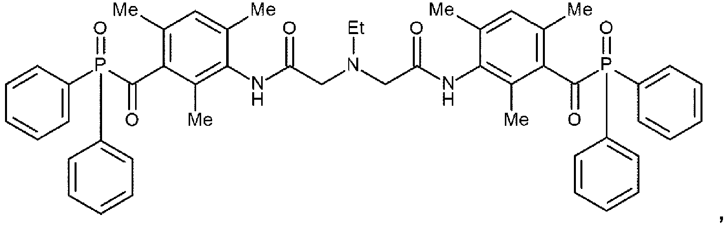 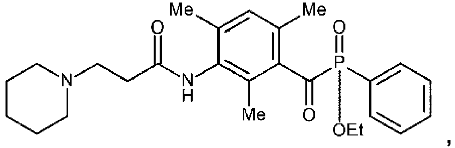 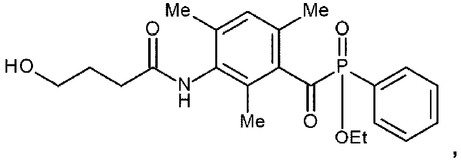 and

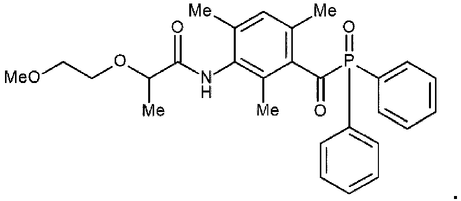

2. The acyl phosphine oxide photoinitiator as claimed in claim 1 having a structure according to Formula (1-2) or (1-3): 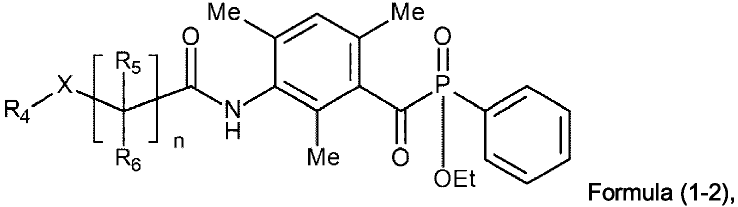 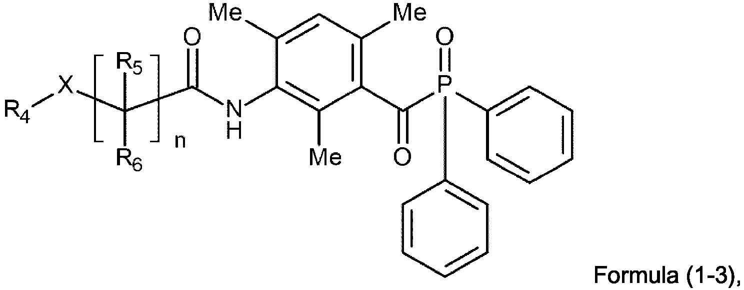 wherein R₄ to R₆, and n are as defined for the compound according to Formula (1).

3. A photocurable composition comprising a photoinitiator according to claim 1 or 2 and a free radical polymerizable compound as essential components.

4. The photocurable composition according to claim 3 comprising N-vinylcaprolactam, vinyl methyl oxazolidinone or 2-(2'-vinyloxyethoxy)ethyl acrylate.

5. The photocurable composition according to claim 3 comprising a combination of at least one polyfunctional thiol compound and at least one polyfunctional polymerizable compound, wherein the polyfunctional polymerizable compound is a polyfunctional monomer or oligomer having a plurality of polymerizable groups selected from a group consisting of a vinyl group, an acrylamide group, a methacrylamide group, a vinyl carbonate group, a vinyl ether group, a vinyl ester group, a vinyl carbamate group, an allyl ether groups, an allyl ester group and an alkyne group.

6. A UV curable inkjet ink comprising the photocurable composition of according to any one of claims 3 to 5.

7. The UV curable inkjet ink according to claim 6 including the acyl phosphine oxide photoinitiator according to claim 1 or 2 in amount of 5 to 20 wt% based on the total weight of the UV curable inkjet ink

8. The UV curable inkjet ink as claimed in claim 6 or 7, further comprising a colour pigment.

9. The UV curable inkjet ink as claimed in claim 8, wherein the colour pigment is a cyan pigment or a white pigment.

10. A UV curable inkjet ink set including one or more UV curable inkjet inks according to any one of claims 6 to 9.

11. The UV curable inkjet ink set according to claim 10 which includes:
- a cyan UV curable inkjet ink containing a beta-copper phthalocyanine pigment;
- a red or magenta UV curable inkjet ink containing a pigment selected from the group consisting of C.I. Pigment Red 57/1, C.I. Pigment Red 122, C.I. Pigment Red 144, C.I. Pigment Red 170, C.I. Pigment Red 175, C.I. Pigment Red 176, C.I. Pigment Red 187, C.I. Pigment Red 188, C.I. Pigment Red 202, C.I. Pigment Red 207, C.I. Pigment Red 242, C.I. Pigment Red 254, C.I. Pigment Red 272, C.I. Pigment Violet 19, and mixed crystals thereof;
- a yellow UV curable inkjet ink containing a pigment selected from C.I. Pigment Yellow 74 C.I. Pigment Yellow 83, C.I. Pigment Yellow 97, C.I. Pigment Yellow 110, C.I. Pigment Yellow 120, C.I. Pigment Yellow 139, C.I. Pigment Yellow 138, C.I. Pigment Yellow 150, C.I. Pigment Yellow 151, C.I. Pigment Yellow 154, C.I. Pigment Yellow 155, C.I. Pigment Yellow 175, C.I. Pigment Yellow 180, C.I. Pigment Yellow 181, C.I. Pigment Yellow 194, C.I. Pigment Yellow 213, C.I. Pigment Yellow 214 and mixed crystals thereof; and
- a black UV curable inkjet ink containing a carbon black pigment; optionally complemented by a white UV curable inkjet ink containing a titanium dioxide pigment and/or a colourless UV curable inkjet ink.

12. A cured product, wherein the cured product is formed by UV LED curing one or more UV curable inkjet inks as defined in any one of claims 6 to 11.

13. An inkjet printing method comprising the steps of:
a) jetting an image with one or more UV curable inkjet ink as defined in any one of claims 6 to 11 on a substrate; and
b) curing the jetted image by UV light emitting diodes having an emission wavelength of 360 nm or larger.

14. The inkjet printing method according to claim 13 wherein the image is printed in a single pass in a single pass inkjet device or in two passes in a multi-pass inkjet device.

## Patentansprüche

1. Ein Acylphosphinoxid-Fotoinitiator mit einer Ethergruppe, einer Hydroxygruppe oder einer tertiären Aminogruppe, die über eine Kohlenstoffkette mit 1 bis 3 Kohlenstoffatomen an eine Amidgruppe auf der Acylgruppe eines Monoacylphosphinoxid-Rests gebunden ist, wobei der Acylphosphinoxid-Fotoinitiator eine Verbindung wie folgt ist:
a) eine Verbindung gemäß Formel (1) 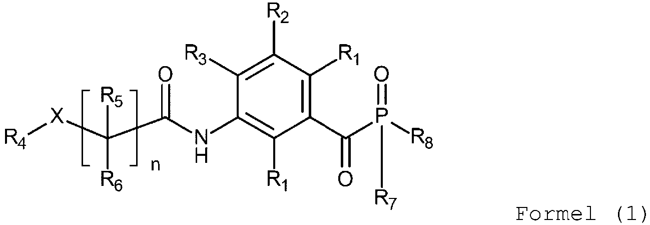 in der
R₁ aus der Gruppe bestehend aus einer Alkylgruppe, einer Arylgruppe und einer Alkoxygruppe ausgewählt wird,
R₂ und R₃ unabhängig voneinander aus der Gruppe bestehend aus Wasserstoff, einer Alkylgruppe, einer Alkenylgruppe, einer Alkynylgruppe und einer Arylgruppe oder Heteroarylgruppe ausgewählt werden,
R₄ aus der Gruppe bestehend aus Wasserstoff, einer Alkylgruppe, einer Alkenylgruppe, einer Alkynylgruppe, einer Arylgruppe oder Heteroarylgruppe, einer (Meth)acrylatgruppe, einer Vinylethergruppe, einer Allylethergruppe und einem Monoacylphosphinoxid-Rest gemäß Formel (1-1) ausgewählt wird,
R₅ und R₆ unabhängig voneinander aus der Gruppe bestehend aus Wasserstoff, einer Alkylgruppe, einer Alkenylgruppe, einer Alkynylgruppe und einer Arylgruppe oder Heteroarylgruppe ausgewählt werden, und einer von R₅ und R₆ einen Monoacylphosphinoxid-Rest gemäß Formel (1-1) bedeuten kann oder
R₅ und R₆ die zur Bildung eines fünf- bis achtgliedrigen Ringes benötigten Atome bedeuten können,
R₇ aus der Gruppe bestehend aus einer Arylgruppe oder Heteroarylgruppe und OR₉ ausgewählt wird,
R₈ eine Arylgruppe oder Heteroarylgruppe bedeutet,
R₉ aus der Gruppe bestehend aus Wasserstoff, einer Alkylgruppe, einer Alkenylgruppe, einer Alkynylgruppe und einer Arylgruppe oder Heteroarylgruppe ausgewählt wird,
X aus der Gruppe bestehend aus O und NR₁₀ ausgewählt wird,
R₁₀ aus der Gruppe bestehend aus einer Alkylgruppe, einer Alkenylgruppe, einer Alkynylgruppe und einer Arylgruppe oder Heteroarylgruppe ausgewählt wird,
n eine ganze Zahl von 1 bis 3 bedeutet, und
wobei der Monoacylphosphinoxid-Rest gemäß Formel (1-1) folgender Formel entspricht: 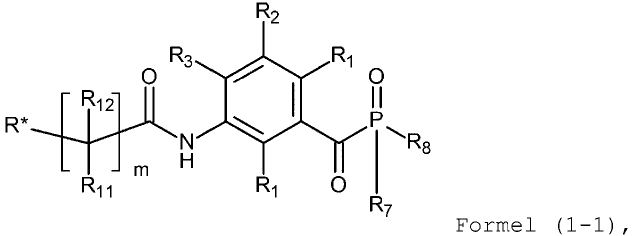
in der R₁₁ und R₁₂ unabhängig voneinander aus der Gruppe bestehend aus Wasserstoff, einer Alkylgruppe, einer Alkenylgruppe, einer Alkynylgruppe und einer Arylgruppe oder Heteroarylgruppe ausgewählt werden,
R* die Bindungsstelle von R₄, R₅ oder R₆ am Fotoinitiator bedeutet, und
m eine ganze Zahl von 1 bis 3 bedeutet,
b) eine Verbindung mit einer Struktur gemäß Formel (2): 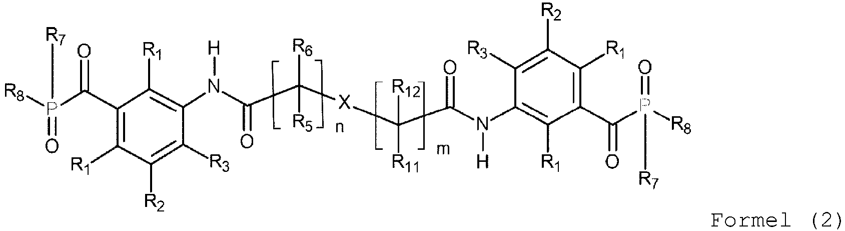 in der R₁ a R₁₂, X, n und m die gleiche Bedeutung wie für die Verbindung gemäß Formel (1) definiert haben, und
c) eine Verbindung ausgewählt aus der Gruppe bestehend aus: 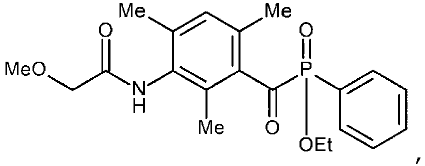 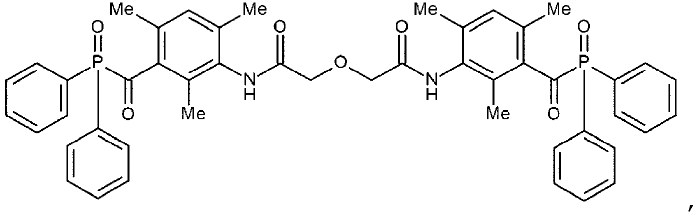 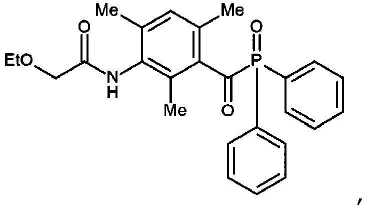 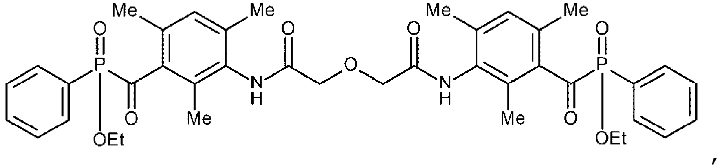 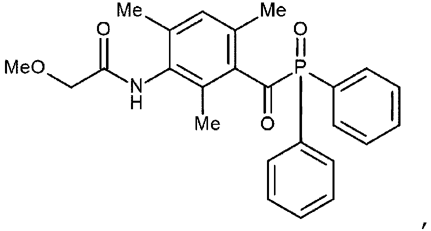 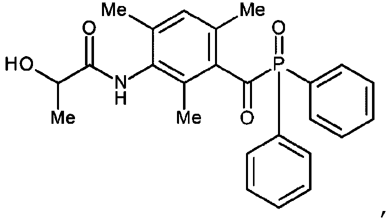 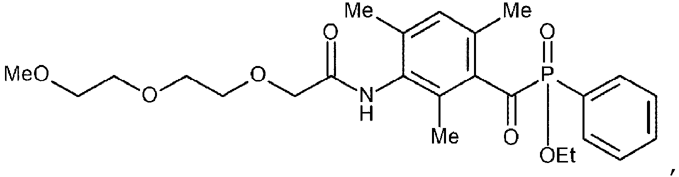 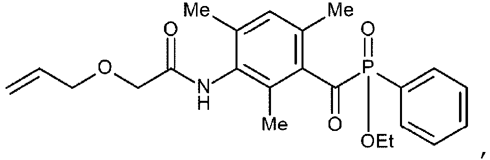 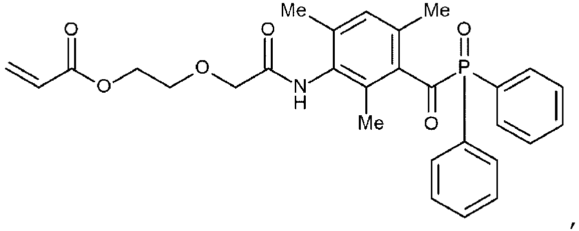 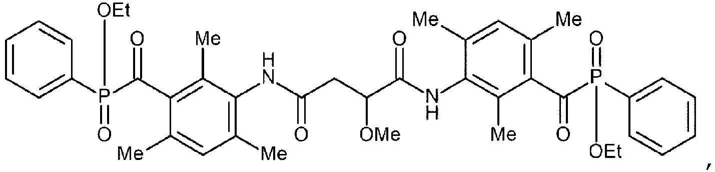 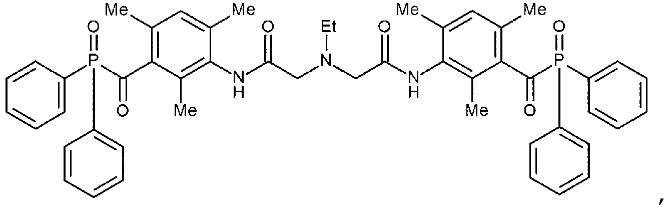 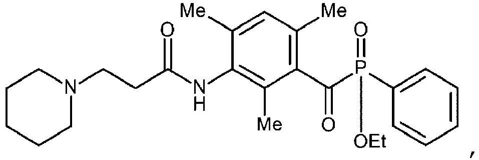 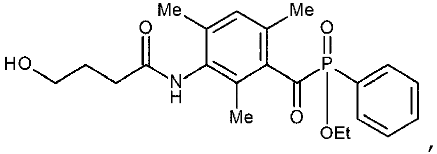 und

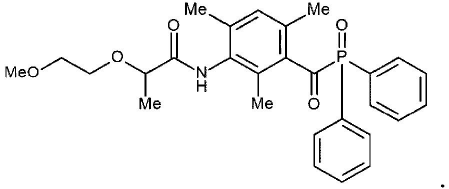

2. Der Acylphosphinoxid-Fotoinitiator nach Anspruch 1 mit einer Struktur gemäß Formel (1-2) oder (1-3): 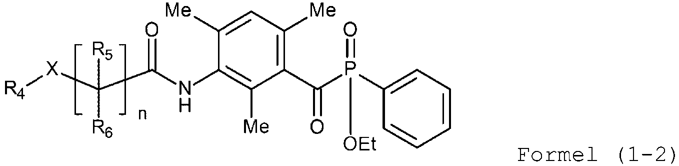 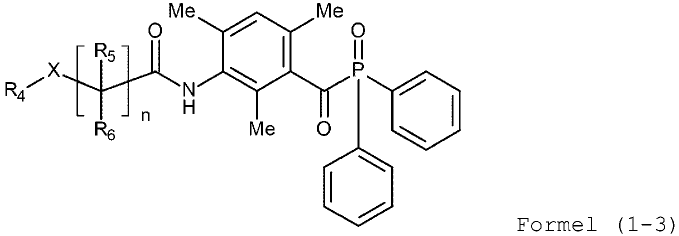 in der R₄ bis R₆ und n die gleiche Bedeutung wie für die Verbindung gemäß Formel (1) definiert haben.

3. Eine fotohärtbare Zusammensetzung, die einen Fotoinitiator nach Anspruch 1 oder 2 und eine durch freie Radikale polymerisierbare Verbindung als Hauptkomponenten enthält.

4. Die fotohärtbare Zusammensetzung nach Anspruch 3, die N-Vinylcaprolactam, Vinylmethyloxazolidinon oder 2-(2'-Vinyloxyethoxy)-ethylacrylat enthält.

5. Die fotohärtbare Zusammensetzung nach Anspruch 3, enthaltend eine Kombination aus mindestens einer polyfunktionellen Thiolverbindung und mindestens einer polyfunktionellen polymerisierbaren Verbindung, wobei die polyfunktionelle polymerisierbare Verbindung ein polyfunktionelles Monomer oder Oligomer ist, enthaltend eine Vielzahl polymerisierbarer Gruppen, ausgewählt aus einer Gruppe bestehend aus einer Vinylgruppe, einer Acrylamidgruppe, einer Methacrylamidgruppe, einer Vinylcarbonatgruppe, einer Vinylethergruppe, einer Vinylestergruppe, einer Vinylcarbamatgruppe, einer Allylethergruppe, einer Allylestergruppe und einer Alkyngruppe.

6. Eine UV-härtbare Tintenstrahltinte, die die fotohärtbare Zusammensetzung nach einem der Ansprüche 3 bis 5 enthält.

7. Die UV-härtbare Tintenstrahltinte nach Anspruch 6, enthaltend den Acylphosphinoxid-Fotoinitiator nach Anspruch 1 oder 2 in einer Menge zwischen 5 Gew.-% und 20 Gew.-%, bezogen auf das Gesamtgewicht der UV-härtbaren Tintenstrahltinte.

8. Die UV-härtbare Tintenstrahltinte nach Anspruch 6 oder 7, die außerdem ein Farbpigment enthält.

9. Die UV-härtbare Tintenstrahltinte nach Anspruch 8, wobei das Farbpigment ein Cyanpigment oder ein weißes Pigment ist.

10. Ein Satz UV-härtbarer Tintenstrahltinten, der eine oder mehrere UV-härtbare Tintenstrahltinten nach einem der Ansprüche 6 bis 9 enthält.

11. Der Satz UV-härtbarer Tintenstrahltinten nach Anspruch 10, enthaltend:
- eine UV-härtbare Cyan-Tintenstrahltinte, die ein β-Kupferphthalocyaninpigment enthält,
- eine rote oder magentafarbige UV-härtbare Tintenstrahltinte, enthaltend ein Pigment, das aus der Gruppe bestehend aus C.I. Pigment Red 57/1, C.I. Pigment Red 122, C.I. Pigment Red 144, C.I. Pigment Red 170, C.I. Pigment Red 175, C.I. Pigment Red 176, C.I. Pigment Red 187, C.I. Pigment Red 188, C.I. Pigment Red 202, C.I. Pigment Red 207, C.I. Pigment Red 242, C.I. Pigment Red 254, C.I. Pigment Red 272, C.I. Pigment Violet 19 und Mischkristallen derselben ausgewählt wird,
- eine gelbe UV-härtbare Tintenstrahltinte, enthaltend ein Pigment, das aus C.I. Pigment Yellow 74, C.I. Pigment Yellow 83, C.I. Pigment Yellow 97, C.I. Pigment Yellow 110, C.I. Pigment Yellow 120, C.I. Pigment Yellow 139, C.I. Pigment Yellow 138, C.I. Pigment Yellow 150, C.I. Pigment Yellow 151, C.I. Pigment Yellow 154, C.I. Pigment Yellow 155, C.I. Pigment Yellow 175, C.I. Pigment Yellow 180, C.I. Pigment Yellow 181, C.I. Pigment Yellow 194, C.I. Pigment Yellow 213, C.I. Pigment Yellow 214 und Mischkristallen derselben ausgewählt wird, und
- eine schwarze UV-härtbare Tintenstrahltinte, enthaltend ein Rußpigment,
gegebenenfalls ergänzt um eine weiße UV-härtbare Tintenstrahltinte, die ein Titandioxidpigment enthält, und/oder eine farblose UV-härtbare Tintenstrahltinte.

12. Ein gehärtetes Produkt, wobei das gehärtete Produkt durch UV-LED-Härtung einer oder mehrerer UV-härtbarer Tintenstrahltinten nach einem der Ansprüche 6 bis 11 gebildet wird.

13. Ein Tintenstrahldruckverfahren, das die folgenden Schritte umfasst:
a) Aufsprühen eines Bildes auf ein Substrat unter Verwendung einer oder mehrerer, wie nach einem der Ansprüche 6 bis 11 definierter UV-härtbarer Tintenstrahltinten, und
b) Härtung des aufgesprühten Bildes mittels UV-Licht mit einer Emissionswellenlänge von mindestens 360 nm emittierender Dioden.

14. Das Tintenstrahldruckverfahren nach Anspruch 13, wobei das Bild in einem einzelnen Durchgang in einer Single-Pass-Tintenstrahlvorrichtung oder in zwei Durchgängen in einer Multi-Pass-Tintenstrahlvorrichtung gedruckt wird.

## Revendications

1. Photoinitiateur d'oxyde d'acylphosphine comprenant un groupe éther, un groupe hydroxy ou un groupe amine tertiaire lié, par le biais d'une chaîne de carbone comprenant 1 à 3 atomes de carbone, à un groupe amide sur le groupe acyle d'un groupement d'oxyde de monoacylphosphine, **caractérisé en ce que** le photoinitiateur d'oxyde d'acylphosphine est un composé qui est:
a) un composé répondant à la Formule (1) 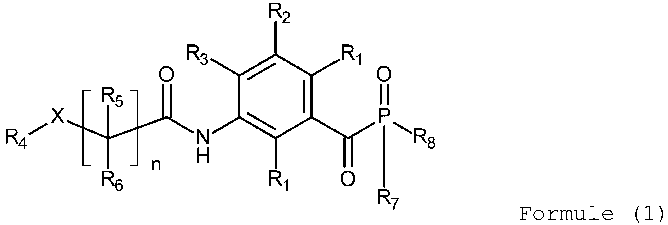 où
R₁ est choisi parmi le groupe composé d'un groupe alkyle, d'un groupe aryle et d'un groupe alcoxy,
R₂ et R₃ sont choisis, indépendamment l'un de l'autre, parmi le groupe composé d'hydrogène, d'un groupe alkyle, d'un groupe alcényle, d'un groupe alcynyle et d'un groupe aryle ou d'un groupe hétéroaryle,
R₄ est choisi parmi le groupe composé d'hydrogène, d'un groupe alkyle, d'un groupe alcényle, d'un groupe alcynyle, d'un groupe aryle, d'un groupe hétéroaryle, d'un groupe (méth)acrylate, d'un groupe éther vinylique, d'un groupe éther allylique et d'un groupement d'oxyde de monoacylphosphine répondant à la Formule (1-1),
R₅ et R₆ sont choisis, indépendamment l'un de l'autre, parmi le groupe composé d'hydrogène, d'un groupe alkyle, d'un groupe alcényle, d'un groupe alcynyle et d'un groupe aryle ou d'un groupe hétéroaryle, et où l'un de R₅ et R₆ peut représenter un groupement d'oxyde de monoacylphosphine répondant à la Formule (1-1) ou R₅ et R₆ peuvent représenter les atomes nécessaires pour former un noyau de 5 à 8 membres,
R₇ est choisi parmi le groupe composé d'un groupe aryle ou d'un groupe hétéroaryle et d'OR₉,
R₈ représente un groupe aryle ou un groupe hétéroaryle,
R₉ est choisi parmi le groupe composé d'hydrogène, d'un groupe alkyle, d'un groupe alcényle, d'un groupe alcynyle et d'un groupe aryle ou d'un groupe hétéroaryle,
X est choisi parmi le groupe composé d'O et de NR₁₀,
R₁₀ est choisi parmi le groupe composé d'un groupe alkyle, d'un groupe alcényle, d'un groupe alcynyle et d'un groupe aryle ou d'un groupe hétéroaryle,
n représente un nombre entier de 1 à 3, et
**caractérisé en ce que** le groupement d'oxyde de monoacylphosphine répondant à la Formule (1-1) répond à la Formule suivante: 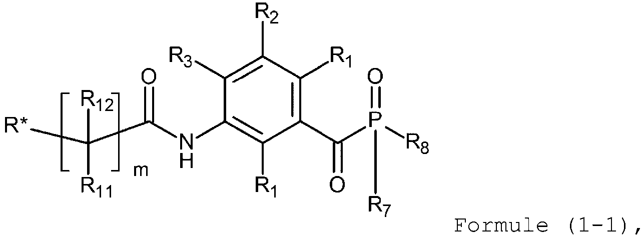
où R₁₁ et R₁₂ sont choisis, indépendamment l'un de l'autre, parmi le groupe composé d'hydrogène, d'un groupe alkyle, d'un groupe alcényle, d'un groupe alcynyle et d'un groupe aryle ou d'un groupe hétéroaryle,
R* représente le site de liaison de R₄, R₅ ou R₆ au photoinitiateur, et
m représente un nombre entier de 1 à 3,
b) un composé ayant une structure répondant à la Formule (2): 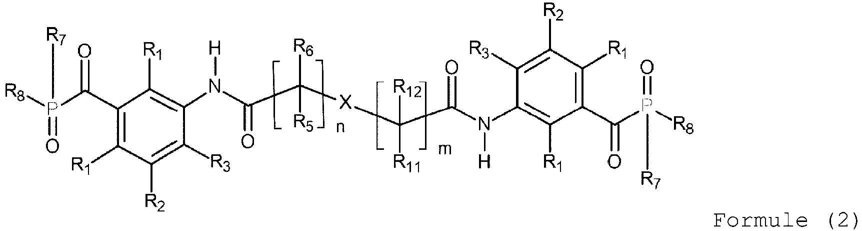 où R₁ à R₁₂, X, n et m ont la même signification telle que définie pour le composé répondant à la Formule (1), et
c) un composé choisi parmi le groupe composé de: 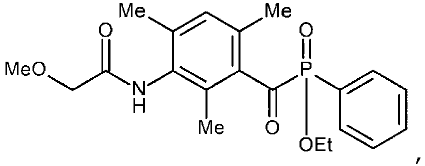 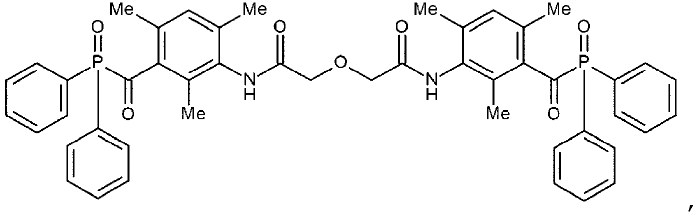 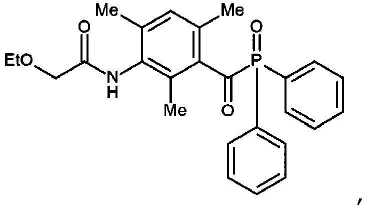 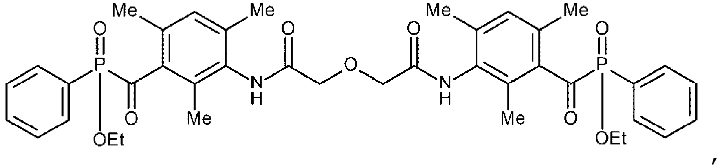 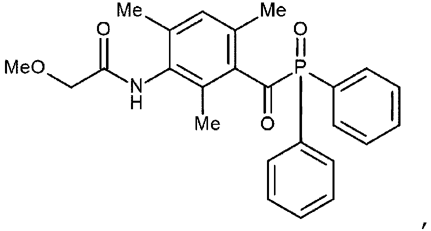 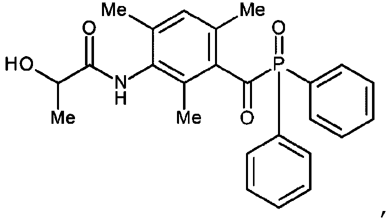 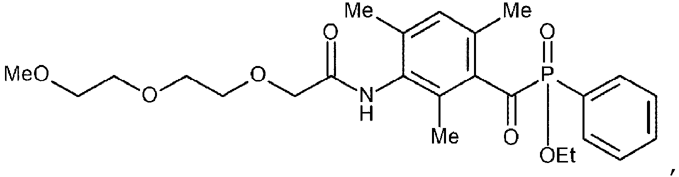 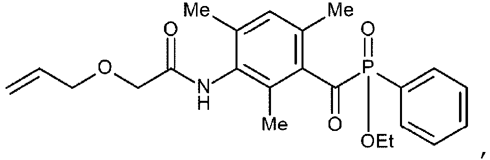 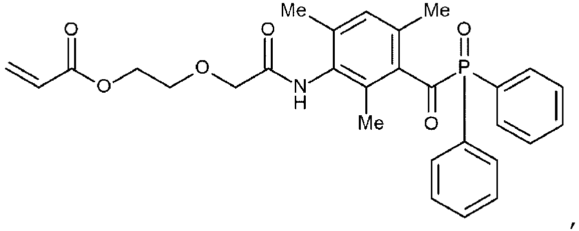 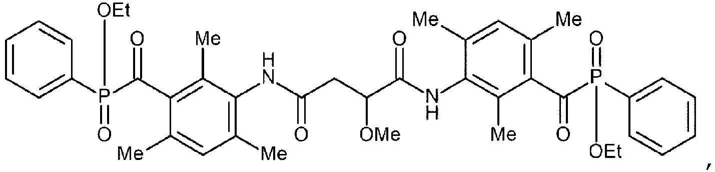 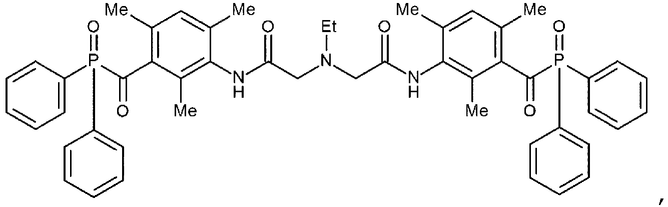 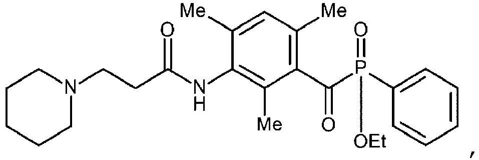 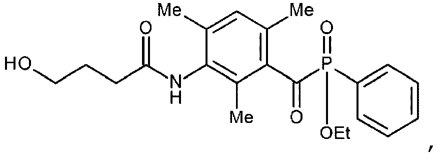 et

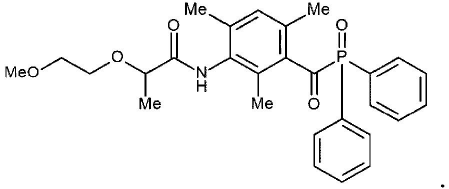

2. Photoinitiateur d'oxyde d'acylphosphine selon la revendication 1 ayant une structure répondant à la Formule (1-2) ou (1-3): 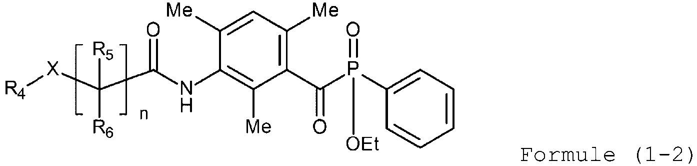 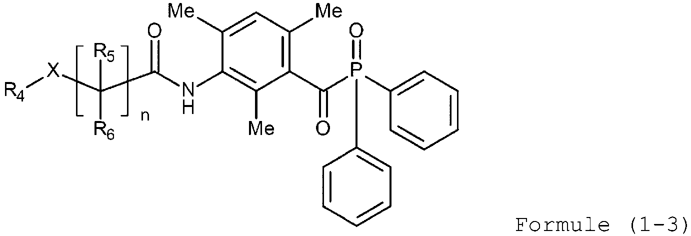 où R₄ à R₆ et n ont la même signification telle que définie pour le composé répondant à la Formule (1).

3. Composition photodurcissable contenant un photoinitiateur selon la revendication 1 ou 2 et un composé polymérisable par radicaux libres comme composants principaux.

4. Composition photodurcissable selon la revendication 3 contenant de la caprolactame de N-vinyle, de l'oxazolidinone vinylméthylique ou de l'acrylate de 2-(2'-vinyloxyéthoxy)-éthyle.

5. Composition photodurcissable selon la revendication 3 contenant une combinaison d'au moins un composé de thiol polyfonctionnel et d'au moins un composé polymérisable polyfonctionnel, **caractérisée en ce que** le composé polymérisable polyfonctionnel est un monomère ou oligomère polyfonctionnel contenant une multitude de groupes polymérisables choisis parmi un groupe composé d'un groupe vinyle, d'un groupe acrylamide, d'un groupe méthacrylamide, d'un groupe carbonate de vinyle, d'un groupe éther vinylique, d'un groupe ester vinylique, d'un groupe carbamate de vinyle, d'un groupe éther allylique, d'un groupe ester allylique et d'un groupe alcyne.

6. Encre pour jet d'encre durcissable par rayonnement UV contenant la composition photodurcissable selon l'une quelconque des revendications 3 à 5.

7. Encre pour jet d'encre durcissable par rayonnement UV selon la revendication 6 contenant le photoinitiateur d'oxyde d'acylphosphine selon la revendication 1 ou 2 dans une quantité comprise entre 5% en poids et 20% en poids par rapport au poids total de l'encre pour jet d'encre durcissable par rayonnement UV.

8. Encre pour jet d'encre durcissable par rayonnement UV selon la revendication 6 ou 7 contenant en outre un pigment de couleur.

9. Encre pour jet d'encre durcissable par rayonnement UV selon la revendication 8, **caractérisée en ce que** le pigment de couleur est un pigment cyan ou un pigment blanc.

10. Ensemble d'encres pour jet d'encre durcissables par rayonnement UV comprenant une ou plusieurs encres pour jet d'encre durcissables par rayonnement UV selon l'une quelconque des revendications 6 à 9.

11. Ensemble d'encres pour jet d'encre durcissables par rayonnement UV selon la revendication 10 comprenant:
- une encre pour jet d'encre durcissable par rayonnement UV de couleur cyan contenant un pigment de β-phtalocyanine de cuivre,
- une encre pour jet d'encre durcissable par rayonnement UV de couleur rouge ou magenta contenant un pigment choisi parmi le groupe composé de C.I. Pigment Red 57/1, C.I. Pigment Red 122, C.I. Pigment Red 144, C.I. Pigment Red 170, C.I. Pigment Red 175, C.I. Pigment Red 176, C.I. Pigment Red 187, C.I. Pigment Red 188, C.I. Pigment Red 202, C.I. Pigment Red 207, C.I. Pigment Red 242, C.I. Pigment Red 254, C.I. Pigment Red 272, C.I. Pigment Violet 19 et de cristaux mixtes de ceux-ci,
- une encre pour jet d'encre durcissable par rayonnement UV de couleur jaune contenant un pigment choisi parmi C.I. Pigment Yellow 74, C.I. Pigment Yellow 83, C.I. Pigment Yellow 97, C.I. Pigment Yellow 110, C.I. Pigment Yellow 120, C.I. Pigment Yellow 139, C.I. Pigment Yellow 138, C.I. Pigment Yellow 150, C.I. Pigment Yellow 151, C.I. Pigment Yellow 154, C.I. Pigment Yellow 155, C.I. Pigment Yellow 175, C.I. Pigment Yellow 180, C.I. Pigment Yellow 181, C.I. Pigment Yellow 194, C.I. Pigment Yellow 213, C.I. Pigment Yellow 214 et des cristaux mixtes de ceux-ci, et
- une encre pour jet d'encre durcissable par rayonnement UV de couleur noire contenant un pigment de noir de carbone, complété éventuellement par une encre pour jet d'encre durcissable par rayonnement UV de couleur blanche contenant un pigment de dioxyde de titane et/ou une encre pour jet d'encre durcissable par rayonnement UV incolore.

12. Produit durci, **caractérisé en ce que** le produit durci est formé en effectuant un durcissement par diodes LED UV d'une ou de plusieurs encres pour jet d'encre durcissables par rayonnement UV selon l'une quelconque des revendications 6 à 11.

13. Procédé d'impression à jet d'encre comprenant les étapes consistant à:
a) projeter une image sur un substrat en utilisant une ou plusieurs encres pour jet d'encre durcissables par rayonnement UV telles que définies selon l'une quelconque des revendications 6 à 11, et
b) durcir l'image projetée au moyen de diodes émettant de la lumière UV ayant une longueur d'onde d'émission d'au moins 360 nm.

14. Procédé d'impression à jet d'encre selon la revendication 13, **caractérisé en ce que** l'image est imprimée en un seul passage dans un procédé de jet d'encre à passage unique ou en deux passages dans un procédé de jet d'encre à passages multiples.
